# EUROPÄISCHE PATENTSCHRIFT

(11) **EP 3 207 074 B1**
(45) Veröffentlichungstag und Bekanntmachung des Hinweises auf die Patenterteilung: **07.06.2023**
(21) Anmeldenummer: 15778967.8
(22) Anmeldetag: 13.10.2015
(51) Int. Cl.: C08G 18/69, C08G 18/75, C08J 9/32, C08G 18/10, C08G 18/42, C09J 163/00, C08L 63/00, C08G 59/40, C08J 9/10

(54) **POLYESTER-PRÄPOLYMERE ALS SCHLAGZÄHIGKEITSVERBESSERER IN EPOXYFORMULIERUNGEN**
POLYESTER PREPOLYMERS AS A TOUGHENER IN EPOXY FORMULATIONS
PRÉ-POLYMÈRE DE POLYESTER EN TANT QU'AMÉLIORATEUR DE LA RÉSILIENCE DANS DES FORMULES ÉPOXY

(30) Priorität: 13.10.2014 EP 14188632
(43) Veröffentlichungstag der Anmeldung: 23.08.2017
(73) Patentinhaber: Sika Technology AG, 6340 Baar (CH)
(72) Erfinder: FRICK, Karsten, CH-5453 Remetschwil (CH); GERBER, Ulrich, CH-8142 Uitikon-Waldegg (CH); FINTER, Jürgen, 79102 Freiburg (DE)
(74) Vertreter: Sika Patent Attorneys
(86) Internationale Anmeldenummer: PCT/EP2015/073664
(87) Internationale Veröffentlichungsnummer: WO 2016/059043

(56) Entgegenhaltungen:
- EP-A1- 0 307 666
- EP-A1- 0 308 664
- EP-A1- 0 950 675
- EP-A1- 1 967 537
- EP-A2- 0 363 919
- EP-A2- 0 363 920
- DE-A1- 1 694 046
- DE-A1- 2 346 404
- DE-A1- 19 853 813
- DE-A1- 19 935 329
- DE-B- 1 299 416
- US-A- 3 317 463
- US-A1- 2010 240 841
- TSUTOMU TAKEICHI ET AL: "Preparation of high-temperature polyurethane by alloying with reactive polyamide", JOURNAL OF POLYMER SCIENCE PART A: POLYMER CHEMISTRY, Bd. 40, Nr. 20, 15. Oktober 2002 (2002-10-15), Seiten 3497-3503, XP055177994, ISSN: 0887-624X, DOI: 10.1002/pola.10438

## Beschreibung

### Technisches Gebiet

Die Erfindung betrifft das Gebiet der Schlagzähigkeitsmodifikatoren und das Gebiet der Epoxidharzzusammensetzungen.

### Stand der Technik

Schlagzähigkeitsmodifikatoren, die auch als Schlagzähigkeitsverbesserer oder Toughener bezeichnet werden, werden dazu eingesetzt, um die Festigkeit von Klebstoffen bei schlagartiger Krafteinwirkung zu verbessern. Insbesondere Epoxidharzzusammensetzungen weisen generell zwar hohe mechanische Festigkeiten auf, sind jedoch sehr spröde, das heisst bei einer schlagartigen Krafteinwirkung, wie sie beispielsweise in einem Zusammenstoss von Fahrzeugen eintritt, bricht das gehärtete Epoxidharz und führt dadurch zu einer Zerstörung des Verbundes.

Das Toughening oder Schlagzähmachen und die Flexibilisierung von Epoxidharzzusammensetzungen wurden mit verschiedenen Schlagzähigkeitsmodifikatoren probiert. Üblich ist z.B. die Verwendung von nanoskaligen Kautschukpartikeln, Flüssigkautschuk und Polyurethan-Polymeren. Diese Schlagzähigkeitsmodifikatoren zeigen zwar eine Verbesserung der Schlagzäheigenschaften von Epoxidharzzusammensetzungen, weisen aber einige Nachteile auf.

Die Nanopartikel sind recht teuer. Die Performance bezüglich der Verbesserung der Schlagzäheigenschaften ist zudem gering. Außerdem ist ihre Stabilität in Doppelschneckenextruder-Verfahren gering.

Flüssigkautschuke werden schon seit längerem zur Zähigkeitsmodifizierung eingesetzt. Beispielsweise wurden Flüssigkautschuke auf Basis von Acrylnitril/Butadien-Copolymeren eingesetzt, wie sie beispielsweise unter dem Namen Hypro^{®} von der Firma Emerald Performance Materials, LLC, USA, kommerziell erhältlich sind. Weiterhin bekannt ist der Einsatz von Addukten von Acrylnitril/Butadien-Copolymeren mit Epoxid-Festharzen wie sie z.B. beschrieben sind in EP 0 308 664 B1.

Derartige bekannte Epoxidharzzusammensetzungen mit Flüssigkautschuken oder Flüssigkautschuk-Addukten als Schlagzähigkeitsmodifikatoren haben sich insbesondere beim Einsatz an metallischen Oberflächen, wie dies z.B. im Fahrzeugbau der Fall ist, als nachteilig erwiesen, wo schlagzähmodifizierte Epoxidharzzusammensetzungen als Klebstoffe oder als Strukturschäume zur Verstärkung in Hohlräumen in strukturellen Bauteilen, als so genannten "Reinforcer", eingesetzt werden. Ein Hauptgrund dafür ist die ungenügende Alterungsbeständigkeit aufgrund auftretender Korrosion im Bereich zwischen der Substratoberfläche und dem Klebstoff bzw. dem Reinforcer. Diese so genannte Unterwanderungskorrosion schwächt die Klebeverbindung und führt zu einem adhäsiven Bruch des Haftverbunds.

EP 2 062 928 A1 betrifft ebenfalls Flüssigkautschuk-Epoxidharz-Addukte als Schlagzähigkeitsmodifikatoren, die eine verbesserte Korrosionsbeständigkeit zeigen. Allerdings besteht weiterhin Verbesserungsbedarf, auch hinsichtlich der mechanischen Eigenschaften. Ferner ist die Herstellung aufwändig und die Produktionskosten sind relativ hoch.

Die als Schlagzähigkeitsmodifikatoren eingesetzten Polyurethan-Polymere zeigen ebenfalls eine geringe Korrosionsbeständigkeit. Des Weiteren verschlechtern sie die Schäumung bei schäumbaren Epoxidharzzusammensetzungen.

EP 0 308 664 A1 beschreibt Gemische aus speziellen Dien-Copolymeren und phenol-terminierten Polyurethanen oder Polyharnstoffen, die Epoxidharze und/oder Addukte von Epoxidharzen enthalten können.

Phenol-terminierte Polyurethane oder Polyharnstoffe und Epoxidharze, die diese Verbindungen enthalten, werden in der EP 0 307 666 A1 offenbart.

DE 2 346 404 befasst sich mit einem Verfahren, um mittels Klebstoffzusammensetzungen auf der Grundlage von Epoxidharzen Oberflächen miteinander zu verbinden.

Harnstoffgruppen aufweisende Polyamine werden in der DE 199 35 329 A1 beschrieben.

EP 0 950 675 A1 offenbart Reaktivsysteme auf Basis einer Polyisocyanatkomponente mit blockierten Isocyanatgruppen und einer Reaktivkomponente mit primären Aminogruppen.

US 3,317,463 betrifft Verfahren zum Schutz von reaktiven Isocyanat-Gruppen mit Blockierungsmitteln.

DE 1 299 416 offenbart wässrige Klebstoffdispersionen zum Verkleben von Kautschuk mit faserigen Materialien, die einen Kautschuklatex und/oder Phenol-Formaldehyd-Harze enthalten sowie Umsetzungsprodukte von aromatischen Diisocyanaten mit Polyethertriolen oder trifunktionellen Polyestern oder Umsetzungsprodukte von aromatischen Polyisocyanaten mit wenigstens drei Isocyanatgruppen mit Polyetherglykolen oder difunktionellen Polyestern.

Ein Formgedächtnisharz wird in US 2010/ 0 240 841 A1 beschrieben, in dem ein Polymilchsäure-Derivat unter Verwendung eines flexiblen Polymers vernetzt ist.

DE 1 694 046 befasst sich mit einem Verfahren zur Herstellung von Formkörpern aus Urethangruppen enthaltenden gießbaren Polymeren, wobei als Reaktionskomponenten ein Hydroxylpolycaprolacton mit Naphthylen-1,5-diisocyanat im Überschuß zur Reaktion gebracht und anschließend mit Hydrochinondiglykolether vernetzt wird.

Eine Formgedächtnisfolie und ein Formgedächtniskörper, die beide aus einem transparenten Formgedächtnis-Polymer gebildet sind, sind in der EP 0 363 919 A2 und der EP 0 363 920 A2 offenbart.

DE 198 53 813 A1 beschreibt einen Klebstoff, der zwei Komponenten A und B enthält. Die Komponente A weist eine durch Bestrahlung mit UV-Strahlen polymerisierbare funktionelle Gruppe und eine zur Reaktion mit einer ein acides Wasserstoffatom aufweisenden Verbindung fähige funktionelle Gruppe auf. Die Komponente B enthält zwei durch Bestrahlung mit UV-Licht oder mit Elektronenstrahlen polymerisierbare funktionelle Gruppen.

Ein Verfahren zur Herstellung von Formgedächtniskörpern wird in der EP 1 967 537 A1 offenbart.

In Takeichi et al., Journal of Polymer Science: Part A: Polymer Chemistry, Band 40, Seiten 3497- 3503 (2002) wird die Herstellung von Hochtemperatur-Polyurethanen durch Legieren mit reaktiven Polyamiden beschrieben.

### Darstellung der Erfindung

Aufgabe der vorliegenden Erfindung ist die Bereitstellung von Schlagzähigkeitsmodifikatoren, welche die vorstehend genannten Nachteile der bekannten Schlagzähigkeitsmodifikatoren überwinden. Insbesondere bestand die Aufgabe, Schlagzähigkeitsmodifikatoren zur Verfügung zu stellen, welche gegenüber den aus dem Stand der Technik bekannten Schlagzähigkeitsmodifikatoren in Epoxidharzzusammensetzungen zu einer Verbesserung der Schlagzähigkeit und zu einer Verbesserung der Korrosionsbeständigkeit gegenüber Unterwanderungskorrosion und damit auch zu einer Verbesserung der Haftung, insbesondere auf metallischen Oberflächen, führen. Überdies sollten die Schlagzähigkeitsmodifikatoren bei schäumbaren Epoxidharzzusammensetzungen die Schäumungseigenschaften verbessern.

Überraschenderweise wurde gefunden, dass diese Aufgabe durch Polymere gemäß Anspruch 1 oder Anspruch 2 gelöst werden kann. Dieses Polymere wirken als Schlagzähigkeitsmodifikatoren (Toughener). Sie helfen überraschenderweise in Epoxidharzzusammensetzungen die mechanischen Eigenschaften dramatisch zu verbessern.

Durch Verwendung der erfindungsgemäßen Schlagzähigkeitsmodifikatoren in Epoxidharzzusammensetzungen können insbesondere die Korrosionsbeständigkeit, die Haftung und die Zähigkeit oder Bruchdehnung verbessert werden, z.B. wenn die Epoxidharzzusammensetzungen auf Substraten, wie metallischen Oberflächen, zur Verklebung oder als Strukturschaum, appliziert werden. Bei Einsatz in schäumbaren Epoxidharzzusammensetzungen wurde ferner überraschenderweise festgestellt, dass das Schaumverhalten ebenfalls verbessert wird.

Die guten Korrosionsergebnisse sind überraschend, da man für Polyester-Polymere eigentlich einen Abbau (Verseifung) bei erhöhter Temperatur und Korrosionsbelastung erwarten dürfte. Der Einsatz derartiger Polymere in Epoxidharzzusammensetzungen führt insbesondere bei der Verklebung an oder von metallischen Oberflächen zu einer wesentlich geringeren Unterwanderungskorrosion und somit zu einem deutlich stärkeren und langlebigeren Haftverbund.

Bezüglich der Schlagzäheigenschaften sind die erfindungsgemäßen Polymere überraschenderweise zumindest gleichwertig mit den bekannten Flüssigkautschuken, deren Herstellung allerdings relativ aufwändig ist und daher deutlich höhere Kosten mit sich bringen.

Der Einsatz von Polyestern in der Formulierung ohne Vorverlängerungsreaktion bringt keine Verbesserung der mechanischen Eigenschaften. Zuvor müssen die Polyester entsprechend der Erfindung verlängert werden. Da die Polyester sehr gut zugänglich und daher auch ökonomisch interessant sind, hat man eine wirkungsvolle und effiziente Lösung zur Verbesserung der mechanischen Eigenschaften von spröden Epoxidharzzusammensetzungen zur Hand.

Weitere Aspekte der Erfindung sind 1K- und 2K-Epoxidharzzusammensetzungen, die diese Polymere enthalten, die entsprechende Verwendung der Polymere sowie Verfahren zur Herstellung der Polymere, die jeweils Gegenstand weiterer unabhängiger Ansprüche sind. Besonders bevorzugte Ausführungsformen der Erfindung sind Gegenstand der abhängigen Ansprüche. Alle nachstehenden Angaben gelten, soweit anwendbar, gleichermaßen sowohl für die erfindungsgemäßen Polymere, Epoxidharzzusammensetzungen, Verwendungen und Verfahren.

### Kurze Beschreibung der Zeichnungen

Anhand der Zeichnungen wird ein bestimmtes bevorzugtes Anwendungsbeispiel der Erfindung näher erläutert. Gleiche Elemente sind in den verschiedenen Figuren mit den gleichen Bezugszeichen versehen. Selbstverständlich ist die Erfindung nicht auf gezeigte und beschriebene Anwendungsbeispiele beschränkt.

Es zeigen:
- Figur 1: eine schematische Darstellung eines Verstärkungsteils vor der Schäumung;
- Figur 2: eine schematische Darstellung eines Verstärkungsteils nach der Schäumung.

In den Figuren sind nur die für das unmittelbare Verständnis wesentlichen Elemente gezeigt.

### Wege zur Ausführung der Erfindung

Der Begriff "Polymer" umfasst im vorliegenden Dokument einerseits ein Kollektiv von chemisch einheitlichen, sich aber in der Regel in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heißt reaktive oligomere oder polymere Vorprodukte, deren funktionelle Gruppen am Aufbau von Makromolekülen beteiligt sind.

Mit "Poly" beginnende Substanznamen wie beispielsweise Polyol oder Polyisocyanat bezeichnen im vorliegenden Dokument Substanzen, die formal zwei oder mehr der in ihrem Namen vorkommenden funktionellen Gruppen pro Molekül enthalten. Der Begriff "terminiert" bezieht sich auf die beiden Endgruppen in einem Polymer. Ein Hydroxyl-terminiertes Polymer ist somit ein Polymer mit zwei Hydroxyl-Endgruppen.

Die Begriffe "Epoxid-Festharz" und "Epoxid-Flüssigharz" sind dem Epoxid-Fachmann bestens bekannt. Die Glasübergangstemperatur T_{G} der Epoxid-Festharze liegt über der Raumtemperatur von 25 °C, d.h. sie lassen sich bei Raumtemperatur zu schüttfähigen Partikeln zerkleinern. Epoxid-Flüssigharze weisen dementsprechend eine T_{G} von nicht mehr als 25 °C auf.

Die Glasübergangstemperatur T_{G} von Epoxidharzen kann durch dynamische Differenzkalorimetrie (DSC, differential scanning calorimetry) bestimmt werden.

Der Begriff "Diphenol" bezeichnet im vorliegenden Dokument einkernige, mehrkernige sowie kondensierte Aromaten und Heteroaromaten, welche zwei phenolische Hydroxylgruppen aufweisen. Hydroxylgruppen, die an einem aromatischen Ringkohlenstoffatom gebunden sind, werden hier als phenolische Hydroxylgruppen bezeichnet. Die phenolische Hydroxylgruppe kann einem Arylring, z.B. an einem Phenyl-, Naphthyl, Anthryl- oder Phenanthrylring, gebunden sein.

Die vorliegende Erfindung betrifft in einem ersten Aspekt ein Reaktionsprodukt eines blockierte Isocyanatgruppen aufweisenden Polyurethan-Polymers mit mindestens einem Epoxidharz,
wobei das blockierte Isocyanatgruppen aufweisende Polyurethan-Polymer ein Additionsprodukt aus mindestens einem Polyisocyanat und mindestens einem Polyesterpolyol ist, wobei die Isocyanatgruppen des Additionsprodukts durch Umsetzung mit mindestens einer aromatischen Verbindung, die eine oder zwei phenolische OH-Gruppen aufweist, blockiert sind, und
wobei das Polyesterpolyol aus mindestens einem C₃-C₁₂-Diol und mindestens einer aliphatischen oder aromatischen C₃-C₁₅-Dicarbonsäure oder deren Methylester gebildet ist.

Die erfindungsgemäße Polymer, welches ein Reaktionsprodukt des blockierte Isocyanatgruppen aufweisenden Polyurethan-Polymers mit mindestens einem Epoxidharz ist, weist bei Raumtemperatur (25°C) bevorzugt einen festen Aggregatzustand auf. Dadurch erleichtert sich die Handhabung derartiger Polymere gegenüber bei Raumtemperatur flüssigen oder auch zähflüssigen Polymeren erheblich.

im Folgenden werden zunächst die Ausgangskomponenten zur Herstellung der erfindungsgemäßen Polymeren und dann die Herstellung der Polymere beschrieben.

Es kann ein Polyisocyanat oder eine Mischung von zwei oder mehr Polyisocyanaten eingesetzt werden. Das Polyisocyanat weist zwei oder mehr Isocyanatgruppen auf. Das Polyisocyanat ist bevorzugt ein Diisocyanat oder Triisocyanat, besonders bevorzugt ein Diisocyanat. Als Polyisocyanate können aliphatische, cycloaliphatische oder aromatische Polyisocyanate, insbesondere Diisocyanate, verwendet werden.

Beispiele für besonders geeignete Polyisocyanate sind 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und -1,4-diisocyanat und Gemische dieser Isomeren, 1-Methyl-2,4- und -2,6-diisocyanatocyclohexan und Gemische dieser Isomeren (HTDI oder H₆TDI), 1-Isocyanato-3,3,5-trimethyl-5-isocyanatomethylcyclohexan (= Isophorondiisocyanat oder IPDI), Perhydro-2,4'- und -4,4'-diphenylmethandiisocyanat (HMDI oder H12MDI), 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3- und - 1,4-xylylendiisocyanat (m- und p-TMXDI), Bis-(1-isocyanato-1-methylethyl)-naphthalin, 2,4- und 2,6-Toluylendiisocyanat und Gemische dieser Isomeren (TDI), 4,4'-, 2,4'- und 2,2'-Diphenylmethandiisocyanat und Gemische dieser Isomeren (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), Norbornandiisocyanat, sowie Oligomere, wie z.B. Biurete oder Isocyanurate, und Polymere der vorgenannten monomeren Polyisocyanate und Mischungen der vorgenannten Polyisocyanate.

Bevorzugt sind monomere Diisocyanate. Gut geeignet sind z.B. MDI, TDI, HDI, XDI, Norbornandiisocyanat und IPDI.

Es kann ein Polyesterpolyol oder eine Mischung von zwei oder mehr Polyesterpolyolen eingesetzt werden. Das Polyesterpolyol weist zwei oder mehr Hydroxygruppen auf, wobei ein Polyesterpolyol mit zwei Hydroxygruppen bevorzugt ist. Das Polyesterpolyol ist bevorzugt ein Hydroxy-terminiertes Polyesterpolyol. Das Polyesterpolyol ist bevorzugt ein lineares Polyesterpolyol, insbesondere ein Hydroxy-terminiertes lineares Polyesterpolyol.

Das Polyesterpolyol weist bevorzugt ein mittleres Molekulargewicht im Bereich von 1000 bis 10000 g/mol auf.

Das mittlere Molekulargewicht des Polyesterpolyols kann auf Basis der Summe der Hydroxylzahl und der Säurezahl des Polyesterpolyols berechnet werden. Die Hydroxylzahl kann gemäß DIN 53 240-02 und die Säurezahl gemäß DIN EN ISO 2114 bestimmt werden.

Das Polyesterpolyol ist bei Raumtemperatur (25°C) vorzugsweise fest. Der Schmelzpunkt des Polyesterpolyols ist bevorzugt größer als 40°C und besonders bevorzugt größer als 50°C. Der Schmelzpunkt kann durch DSC-Analyse (DSC = Differential Scanning Calorimetry bzw. dynamische Differenzkalorimetrie) gemäß DIN 53765 bei einer Heizgeschwindigkeit von 20°C/min bestimmt werden. Wegen der besseren Reproduzierbarkeit ist es üblich, den Schmelzpunkt bei einem zweiten Heizdurchgang zu bestimmen.

Polyesterpolyole sind z.B. erhältlich aus der Umsetzung von einem oder mehreren zwei- bis dreiwertigen Alkoholen mit einer oder mehreren organischen Dicarbonsäuren oder deren Anhydriden oder Estern oder aus der Polymeriation von Lactonen wie z.B. ε-Caprolacton.

Beispiele für zwei- oder dreiwertige Alkohole sind 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan.

Beispiele für organische Dicarbonsäuren sind Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder deren Anhydride oder Ester.

Das Polyesterpolyol ist aus mindestens einem aliphatischen oder aromatischen C₃-C₁₂-Diol, vorzugsweise mindestens einem aliphatischen C₃-C₁₂-Diol, wie z.B. 1,6-Hexandiol, und mindestens einer aliphatischen oder aromatischen C₃-C₁₅-Dicarbonsäure, wie z.B. Dodecandicarbonsäure und/oder Terephthalsäure, oder deren Methylester gebildet. Aliphatisch schließt linear aliphatisch und cycloaliphatisch ein, wobei linear aliphatisch bevorzugt ist.

Die Isocyanatgruppen des Additionsprodukts sind durch Umsetzung mit mindestens einer aromatischen Verbindung, die eine oder zwei phenolische OH-Gruppen aufweist, blockiert.

Eine aromatische Verbindung zur Blockierung der Isocyanatgruppen eines Additionsprodukts umfasst mindestens eine Hydroxylgruppe. Die eine oder mehreren Hydroxylgruppen können jeweils unabhängig voneinander an einem aliphatischen Kohlenstoffatom oder bevorzugt an einem aromatischen Ringkohlenstoffatom gebunden sein.

Eine aromatische Verbindung weist bevorzugt die Formel (I) auf

HO-R⁴ (I)

worin der Rest R⁴ in der Formel (I) für eine Alkylarylgruppe oder für einen einkernigen, mehrkernigen oder kondensierten aromatischen Rest, welcher gegebenenfalls eine oder mehrere phenolische Hydroxylgruppen aufweist, steht. Das Alkyl der Alkylarylgruppe kann z.B. C₁₋₄-Alkyl sein.

Der einkernige, mehrkernige oder kondensierte aromatische Rest kann eine oder mehrere Arylgruppen enthalten. Bei den Arylgruppen handelt es sich bevorzugt um Phenyl, Naphthyl, Anthryl oder Phenanthryl, wobei Phenyl besonders bevorzugt ist. Diese Arylgruppen ebenso wie die Alkylarylgruppe können eine oder mehrere Substituenten enthalten.

Eine aromatische Verbindung bzw. die Verbindung der Formel (I) weist besonders bevorzugt die Formel (II) auf 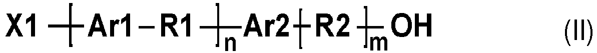 worin
X1 OH oder H ist,
Ar1 und Ar2 unabhängig voneinander eine zweiwertige Arylgruppe, bevorzugt Phenylen, Naphthylen, Anthrylen oder Phenanthrylen, insbesondere Phenylen, die gegebenenfalls mit einem oder mehreren Substituenten substituiert ist, sind, wobei die Substituenten bevorzugt ausgewählt sind aus COOH, Alkyl, z.B. C₁₋₁₈-Alkyl, bevorzugt C₁₋₄-Alkyl, Alkenyl, z.B. C₁₋₁₈-Alkenyl, Alkoxy, z.B. C₁₋₄-Alkoxy, Phenyl, welches gegebenenfalls mit Alkyl, insbesondere C₁₋₄-Alkyl, und/oder OH substituiert ist, und Hydroxyl,
R1 und R2 unabhängig voneinander eine zweiwertige Alkylgruppe, bevorzugt C₁₋₄-Alkylen, insbesondere Methylen, die gegebenenfalls mit einer oder mehreren Substituenten substituiert ist, sind, wobei die Substituenten bevorzugt ausgewählt sind aus COOH, Alkyl, z.B. C₁₋₁₈-Alkyl, bevorzugt C₁₋₄-Alkyl, Alkenyl, z.B. C₁₋₁₈-Alkenyl, Alkoxy, z.B. C₁₋₄-Alkoxy, Phenyl, welches gegebenenfalls mit Alkyl, insbesondere C₁₋₄-Alkyl, und/oder OH substituiert ist, wobei R1 auch eine Einfachbindung sein kann,
n 0, 1 oder 2, bevorzugt 0 oder 1, ist und
m 0 oder 1, bevorzugt 0, ist.

Eine aromatische Verbindung mit mindestens einer Hydroxylgruppe, bzw. die aromatische Verbindung der Formel (II) ist bevorzugt ein Diphenol, insbesondere ein Bisphenol wie Bisphenol A oder Bisphenol F, ein alkylsubstituiertes Phenol, ein alkenylsubstituiertes Phenol oder ein alkoxysubstituiertes Phenol. Das Alkyl, Alkenyl und Alkoxy kann substituiert sein, z.B. mit einer Arylgruppe wie Phenyl. Das alkylsubstituierte, alkenylsubstituierte oder alkoxysubstituierte Phenol kann einen oder mehrere, vorzugsweise einen Alkyl-, Alkenyl- bzw. Alkoxysubstituenten aufweisen. Der Alkyl-, Alkenyl- bzw. Alkoxysubstituent weist bevorzugt 1 bis 20 C-Atome auf.

Bevorzugte Beispiele für eine aromatische Verbindung, die mindestens eine Hydroxylgruppe aufweist, sind Phenol, Kresol, p-tert.-Butylphenol, Cardolite NC-700 (3-Pentadecenylphenol (aus Cashewnuss-Scha!en-Ö!)), Nonylphenol, Allylphenol, Hydrochinon-monomethylether, p-Hydroxybenzoesäure, Benzylalkohol, Hydroxybenzylalkohol, und Bisphenole oder Diphenole, wie z.B. mit Styrol oder Dicyclopentadien umgesetzte Phenole, Bisphenol A, Bisphenol F, Phenolphthalein, 4-Bis(4-hydroxyphenyl)valeriansäure und 4-Cumylphenol.

Bei der aromatischen Verbindung handelt es sich um eine aromatische Verbindung, die eine oder zwei phenolische OH-Gruppen aufweist. Sofern die aromatische Verbindung zwei phenolische OH-Gruppen aufweist (Diphenole), können die beiden phenolischen OH-Gruppen an einer Arylgruppe, insbesondere einer Phenylgruppe, oder an zwei unterschiedlichen Arylgruppen, insbesondere Phenylgruppen, gebunden sein.

Bei dem Epoxidharz, das mit dem blockierte Isocyanatgruppen aufweisenden Polyurethan-Polymer zur Bildung des Reaktionsprodukts umgesetzt wird, kann es sich um jedes übliche, dem Fachmann bekannte Epoxidharz handeln. Epoxidharze weisen im allgemeinen im Durchschnitt mindestens 2 Epoxidgruppen im Molekül auf. Das Epoxidharz kann mindestens ein Epoxid-Festharz, mindestens ein Epoxid-Flüssigharz oder mindestens ein Novolak-Epoxidharz oder eine Mischung dieser Epoxidharze sein.

Als Epoxid-Festharz eignet sich vorzugsweise ein Epoxid-Festharz der Formel (III)

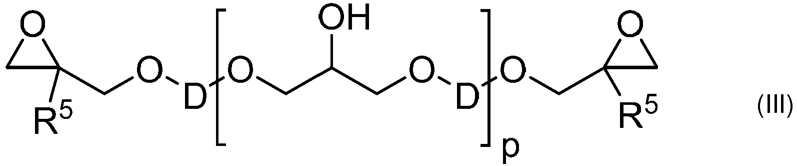

In der Formel (III) steht p für einen Wert von ≥ 2, insbesondere von 2 bis 12, bevorzugt von 2 bis 7.

Der Rest D steht unabhängig voneinander jeweils für einen zweiwertigen Rest eines Diphenols nach Entfernung der beiden Hydroxylgruppen. Als Diphenol eignen sich insbesondere Diphenole, welche ausgewählt sind aus der Gruppe bestehend aus 1,4-Dihydroxybenzol, 1,3-Dihydroxybenzol, 1,2-Dihydroxybenzol, 1,3-Dihydroxytoluol, 3,5-Dihydroxybenzoate, 2,2-Bis(4-hydroxyphenyl)propan (= Bisphenol A), Bis(4-hydroxyphenyl)methan (= Bisphenol F), Bis(4-hydroxyphenyl)sulfon (= Bisphenol S), Naphtoresorcin, Dihydroxynaphthalin, Dihydroxyanthrachinon, Dihydroxy-biphenyl, 3,3-Bis(p-hydroxyphenyl)phthalide, 5,5-Bis(4-hydroxyphenyl)hexahydro-4,7-methanoindan, Phenolpthalein, Fluorescein, 4,4'-[Bis-(hydroxyphenyl)-1,3-phenylenbis-(1-methyl-ethyliden)] (= Bisphenol M), 4,4'-[Bis-(hydroxyphenyl)-1,4-phenylenbis-(1-methyl-ethyliden)] (= Bisphenol P), 2,2'-Diallyl-bisphenol-A, Diphenole und Dikresole hergestellt durch Umsetzung von Phenolen oder Kresolen mit Diisopropylidenbenzol sowie alle Isomeren der vorgenannten Verbindungen.

Der Rest R⁵ steht unabhängig voneinander jeweils für ein Wasserstoffatom oder für eine Methylgruppe.

Das Epoxid-Festharz ist bevorzugt ein Bisphenol A-Epoxid-Festharz, ein Bisphenol F-Epoxid-Festharz oder eine Mischung davon.

Als Epoxid-Flüssigharz eignet sich vorzugsweise ein Epoxid-Flüssigharz der Formel (IV)

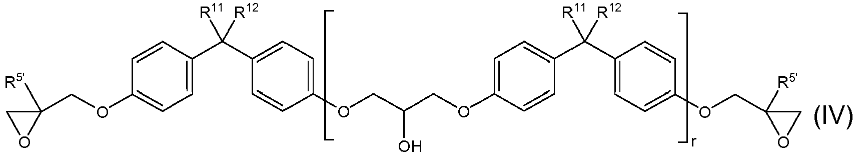

In der Formel (IV) stehen die Reste R^{5'}, R¹¹ und R¹² unabhängig voneinander entweder für H oder CH₃. Weiterhin steht der Index r für einen Wert von 0 bis 1. Bevorzugte Epoxid-Flüssigharze weisen einen Wert r von ≤ 0,2 auf.

Es handelt sich somit vorzugsweise um Diglycidylether von Bisphenol A (BADGE), von Bisphenol F (BFDGE) sowie von Bisphenol A/F. Die Bezeichnung ,A/F' verweist hierbei auf eine Mischung von Aceton mit Formaldehyd, welche bei dessen Herstellung als Edukt verwendet wird. Solche Flüssigharze sind beispielsweise unter den Handelsnamen Araldite^{®} GY 250, Araldite^{®} PY 304, Araldite^{®} GY 282 von der Firma Huntsman International, LLC, USA, oder D.E.R^{®} 331 oder D.E.R^{®} 330 von der Firma The Dow Chemical Company, USA, oder unter den Handelsnamen Epikote^{®} 828 oder Epikote^{®} 862 von der Firma Hexion Specialty Chemicals Inc., USA, kommerziell erhältlich.

Das Epoxidharz kann ferner ein Novolak-Epoxidharz sein, welches ein Epoxidgruppen aufweisendes Phenolharz ist. Bevorzugt werden dabei Novolak-Epoxidharze, welche hergestellt sind aus einer Polykondensationsreaktion von Phenol oder Kresol mit Formaldehyd in einem stöchiometrischen Verhältnis von Phenol zu Formaldehyd von ≥ 1:1, insbesondere von 1.2:1 bis 2:1, unter Verwendung meist saurer Katalysatoren, und anschließender Reaktion des erhaltenen Polyphenols (auch Novolak genannt) mit Epichlorohydrin und/oder 2-Methyl-epichlorhydrin.

Derartige Novolak-Epoxidharze sind z.B. unter den Handelsnamen D.E.N^{™} 431 und D.E.N^{™} 438 kommerziell erhältlich von The Dow Chemical Company, USA.

In einer optionalen und bevorzugten Ausführungsform kann das Reaktionsprodukt von mindestens einem Epoxidharz mit mindestens einem blockierte Isocyanatgruppen aufweisenden Polyurethan-Polymer zumindest teilweise zusätzlich mit einem Carboxylgruppen aufweisenden Polymer, vorzugsweise einem Carboxylgruppen-terminierten Polymer umgesetzt sein. Das Carboxylgruppen aufweisende Polymer ist bevorzugt ein mit Carboxylgruppen terminiertes Butadien/Acrylnitril-Copolymer. Das Carboxylgruppen aufweisende Polymer bzw. das Carboxylgruppen-terminierte Butadien/Acrylnitril-Copolymer ist bevorzugt ein Flüssigkautschuk.

Das Carboxylgruppen aufweisenden Polymer ist bevorzugt ein Carboxylgruppen terminiertes Polymer der Formel (V) 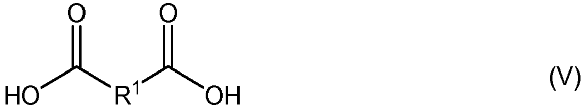 wobei R¹ für einen zweiwertigen Rest eines Carboxylgruppen terminierten Butadien/Acrylnitril-Copolymers nach Entfernung der terminalen Carboxylgruppen steht.

Der Rest R¹ in der Formel (V) steht insbesondere für einen zweiwertigen Rest der Formel (VI)

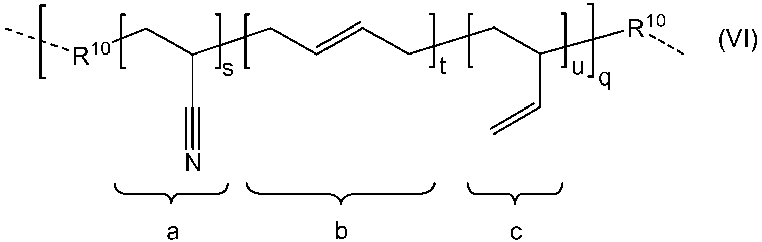

Die gestrichelten Linien stellen dabei die Bindungen zu den zwei Carboxylgruppen der Formel (V) dar. a stellt das Strukturelement dar, welches von Acrylnitril stammt und b und c die Strukturelemente, welche von Butadien stammen.

Der Rest R¹⁰ steht für einen linearen oder verzweigten Alkylenrest mit 1 bis 6 C-Atomen, insbesondere mit 4 oder 5 C-Atomen, welcher gegebenenfalls mit ungesättigten Gruppen substituiert ist.

Weiterhin steht der Index q für einen Wert zwischen 40 und 100, insbesondere zwischen 50 und 90, bevorzugt zwischen 52 und 66, meist bevorzugt zwischen 54 und 62. Die Indices s, t, und u stellen ihrerseits Werte dar, die das Verhältnis der Strukturelemente a, b und c zueinander beschreiben. Der Index s steht für Werte von 0,05 bis 0,3, insbesondere von 0,1 bis 0,25, bevorzugt von 0,1 bis 0,2, meist bevorzugt von 0,1 bis 0,18, der Index t für Werte von 0,5 bis 0,8, insbesondere von 0,6 bis 0,7, der Index u für Werte von 0,1 bis 0,2, insbesondere von 0,13 bis 0,15, mit der Massgabe, dass die Summe von s, t und u gleich 1 ist.

Dem Fachmann ist klar, dass die in Formel (VI) gezeigte Struktur als vereinfachte Darstellung zu verstehen ist. Somit können die Strukturelemente, welche mit a, b und c bezeichnet sind, jeweils zufällig, abwechselnd oder blockweise zueinander angeordnet sein.

Der Rest R¹ steht besonders bevorzugt für einen Rest, wie er nach der formellen Entfernung der Carboxylgruppen, aus einem unter dem Handelsnamen Hypro^{®} CTBN von der Firma Emerald Performance Materials, LLC, USA, kommerziell vertriebenen Carboxylgruppen terminierten Butadien/Acrylonitril-Copolymer erhältlich ist.

In einem zweiten Aspekt umfasst die Erfindung ein Verfahren zur Herstellung der erfindungsgemäßen Polymere, wobei das Verfahren folgende Schritte umfasst:
a) Umsetzen von mindestens einem Polyisocyanat mit mindestens einem Polyesterpolyol, gegebenenfalls in Anwesenheit eines Katalysators, um ein Isocyanatgruppen aufweisendes Polyurethan-Polymer als Additionsprodukt zu erhalten, wobei das Polyesterpolyol aus mindestens einem C₃-C₁₂-Diol und mindestens einer aliphatischen oder aromatischen C₃-C₁₅-Dicarbonsäure oder deren Methylester gebildet ist,
b) Umsetzen des Isocyanatgruppen aufweisenden Polyurethan-Polymers mit mindestens einer aromatischen Verbindung, die eine oder zwei phenolische OH-Gruppen aufweist, um die Isocyanatgruppen zu blockieren, und
c) Umsetzen des blockierte Isocyanatgruppen aufweisenden Polyurethan-Polymers mit mindestens einem Epoxidharz, gegebenenfalls in Anwesenheit eines Katalysators.

In einer optionalen und bevorzugten Variante kann ein Carboxylgruppen aufweisendes Polymer, bevorzugt einem mit Carboxylgruppen terminiertes Butadien/Acrylnitril-Copolymer, in Schritt c) oder nach Schritt c) zugegeben und mit umgesetzt werden, so dass ein modifiziertes Reaktionsprodukt erhalten wird. Bei dieser optionalen Variante ist es bevorzugt, dass in Schritt c) das blockierte Isocyanatgruppen aufweisenden Polyurethan-Polymer zusammen mit dem Carboxylgruppen aufweisenden Polymer, bevorzugt dem mit Carboxylgruppen terminierten Butadien/Acrylnitril-Copolymer, mit mindestens einem Epoxidharz, gegebenenfalls in Anwesenheit eines Katalysators, umgesetzt wird.

Das gesamte Verfahren kann als Eintopfreaktion durchgeführt werden, d.h. die bei der jeweiligen Stufe erhaltene Produktmischung kann ohne weitere Aufbereitung in der nächsten Stufe eingesetzt werden. Alle oder einzelne Reaktionsstufen können gegebenenfalls bei Bedarf unter Schutzgasatmosphäre oder bevorzugt unter Vakuum durchgeführt werden.

In einem ersten Schritt wird das mindestens eine Polyisocyanat und das mindestens eine Polyesterpolyol, gegebenenfalls in Anwesenheit eines Katalysators, umgesetzt, um ein Isocyanatgruppen aufweisendes Polyurethan-Polymer als Additionsprodukt zu erhalten. Bei hochschmelzenden Polyesterpolyolen mit einem Schmelzpunkt über 100°C kann z.B. auf einen Katalysator (z.B. DBTL) verzichtet werden.

Bei dem erhaltenen Additionsprodukt handelt es sich bevorzugt um ein Isocyanat-terminiertes Polyurethan-Prepolymer. Das erhaltene Additionsprodukt stellt ein Ester-Urethan-Polymer mit erhöhter Flexibilität dar.

Das mindestens eine Polyisocyanat und das mindestens eine Polyesterpolyol werden in einem solchen Verhältnis umgesetzt, dass die Isocyanatgruppen des Polyisocyanats in einem stöchiometrischen Überschuss gegenüber den Hydroxylgruppen des Polyesterpolyols vorliegen. Das molare Verhältnis der Isocyanatgruppen des Polyisocyanats zu den Hydroxylgruppen des Polyesterpolyols ist dabei bevorzugt mindestens 2 und liegt bevorzugt im Bereich von 2,05 bis 2,1.

Derartige Umsetzungen von Polyisocyanaten mit Polyolen sowie die Reaktionsbedingungen hierfür sind dem Fachmann gut vertraut. Typischerweise erfolgt die Umsetzung abhängig vom Schmelzpunkt des Polyesterpolyols bei höheren Temperaturen, z.B. mindestens 90 °C, bevorzugt im Bereich von 100 bis 130 °C. Gegebenenfalls werden für die Reaktion geeignete Katalysatoren eingesetzt. Beispiele für geeignete Katalysatoren sind organische Sn-Verbindungen, wie z.B. DBTL (Di-butyl-zinndilaurat).

Da das Polyesterpolyol in der Regel bei Raumtemperatur fest ist, wird es zunächst aufgeschmolzen und gegebenenfalls ein Katalysator zugesetzt. Anschließend wird das Polyisocyanat zugemischt und vorzugsweise bei erhöhter Temperatur umgesetzt. Die Reaktionsdauer kann z.B. in einem Zeitraum von 60 bis 120 min liegen.

Die erhaltene Reaktionsmischung mit dem Isocyanatgruppen aufweisenden Polyurethanpolymer kann ohne weitere Aufbereitung für den zweiten Schritt eingesetzt werden.

Im zweiten Schritt wird das vorstehend gebildete Isocyanatgruppen aufweisende Polyurethan-Polymer mit der mindestens einen aromatischen Verbindung, die mindestens eine Hydroxylgruppe aufweist, umgesetzt, um die Isocyanatgruppen des gebildeten Polyurethan-Polymers zu blockieren. Die mindestens eine aromatische Verbindung, die eine oder zwei phenolische OH-Gruppen aufweist, kann einfach nach Abschluss der Additionsreaktion im ersten Schritt in die Reaktionsmischung gegeben werden.

Die mindestens eine aromatische Verbindung, die eine oder zwei phenolische OH-Gruppen aufweist, wird bevorzugt in einer solchen Menge zu dem Isocyanatgruppen aufweisenden Polyurethan-Polymer gegeben, dass die Hydroxylgruppen der aromatischen Verbindung in einem stöchiometrischen Überschuss gegenüber den Isocyanatgruppen des Isocyanatgruppen aufweisenden Polyurethan-Polymers bzw. der Reaktionsmischung, die dieses Polymer enthält, vorliegen. Das molare Verhältnis von Hydroxylgruppen zu Isocyanatgruppen ist bevorzugt mindestens 2,05 und liegt bevorzugter im Bereich von 2,05 bis 3. Bei Einsatz von einer aromatischen Verbindung mit einer Hydroxylgruppe, insbesondere einem Monophenol, ist das molare Verhältnis von Hydroxylgruppen zu Isocyanatgruppen bevorzugt etwa im Bereich von 2,05 bis 2,15. Bei Einsatz von einer aromatischen Verbindung mit zwei Hydroxylgruppen, insbesondere einem Bisphenol, ist das molare Verhältnis von Hydroxylgruppen zu Isocyanatgruppen bevorzugt etwa im Bereich von 2,05 bis 3.

Umsetzungen von Hydroxylverbindungen mit Isocyanatverbindungen sowie die Reaktionsbedingungen hierfür sind dem Fachmann gut vertraut. Typischerweise erfolgt die Umsetzung bei höheren Temperaturen, z.B. mindestens 100 °C, bevorzugt im Bereich von 120 °C bis 150 °C. Gegebenenfalls werden für die Umsetzung zusätzliche Katalysatoren eingesetzt.

Die Reaktionsdauer kann z.B. in einem Zeitraum von 2 bis 6 h liegen. Der Fortgang der Reaktion kann durch Bestimmung des Isocyanatgehalts in der Reaktionsmischung verfolgt werden. Der Isocyanatgehalt nach Abschluss der Reaktion sollte z.B. unter 0,2 % liegen.

In dem folgenden Reaktionsschema 1 sind schematisch die Umsetzungsprodukte zwischen dem Polyesterpolyol und dem Polyisocyanat sowie zwischen dem gebildeten Isocyanatgruppen aufweisenden Polyurethan-Polymer und der aromatischen Verbindung veranschaulicht, wobei die aromatische Verbindung eine phenolische OH-Gruppe aufweist. Alle aufgeführten Reaktionsschemen sind beispielhaft und dienen zur Erläuterung der Erfindung und sollen den Umfang der Erfindung nicht beschränken. Beispielsweise kann das Polyurethan-Polymer auch einen höheren Polymerisationsgrad aufweisen und z.B. zwei oder mehr Polyesterpolyol-Einheiten und dementsprechend mehr Polyisocyanat-Einheiten aufweisen.

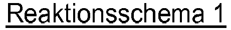

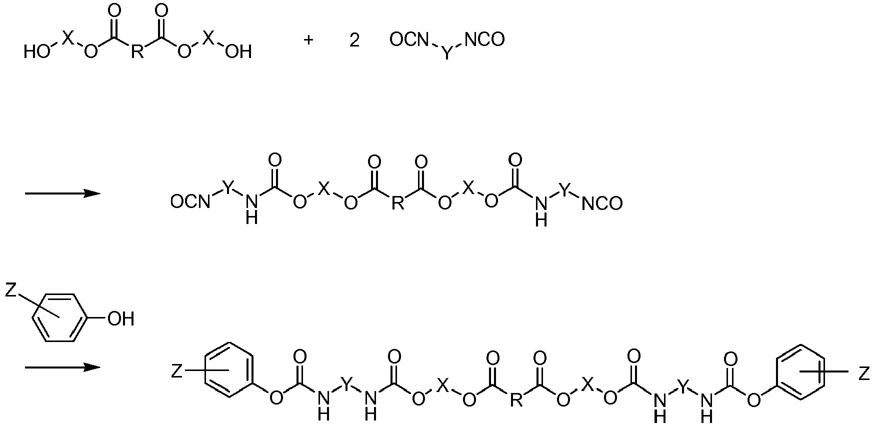

In dem Reaktionsschema 1 stellt R eine Polyesterkette dar, X ist der zweiwertige Rest eines Diols (typischerweise 1,6 Hexandiol) nach Entfernung der terminalen Hydroxylgruppen, Y ist der zweiwertige Rest eines Diisocyanats nach Entfernung der terminalen Isocyanatgruppen (typischerweise IPDI ) und Z repräsentiert schematisch ein oder mehrere mögliche Substituenten bzw. den Rest der aromatischen Verbindung (typischerweise BPA).

Sofern die aromatische Verbindung zwei oder mehr reaktive OH-Gruppen aufweist, verbleiben nach der Additionsreaktion mit einer Isocyanatgruppe eine oder mehrere reaktive Gruppen. Handelt es sich bei der aromatischen Verbindung z.B. um eine bifunktionelle Verbindung ist es in Abhängigkeit von den Mengenverhältnissen der Ausgangsmaterialien gegebenenfalls bis zu einem gewissen Grad möglich, dass eine weitere Kettenverlängerung z.B. mit nicht umgesetztem Polyisocyanat stattfindet.

Im folgenden Reaktionsschema 2 ist schematisch die Reaktionsfolge bei Einsatz einer bifunktionellen aromatischen Verbindung (Bisphenol A) erläutert, welche auch eine mögliche Kettenverlängerung über nicht umgesetztes Polyisocyanat einschließt.

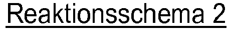

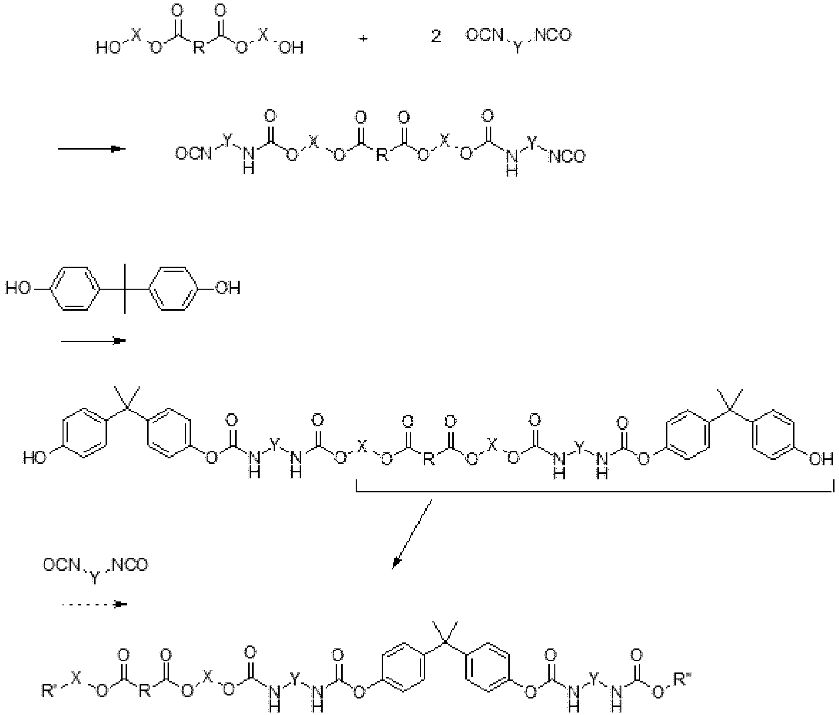

Die Platzhalter R, X und Y sind dabei wie in Reaktionsschema 1 definiert. R' und R" bei der möglichen Kettenverlängerung mit überschüssigem Polyisocyanat repräsentieren vereinfacht den Rest der Polymerkette. Die dargestellte mögliche Umsetzung mit dem Polyisocyanat veranschaulicht lediglich das Prinzip und gibt keine stöchiometrische Reaktion wieder. Für die zweite Isocyanatgruppe des Polyisocyanats können unterschiedliche Reaktionspartner im Gemisch in Frage kommen.

Das erhaltene blockierte Isocyanatgruppen aufweisende Polyurethan-Polymer kann wie es ist ohne weitere Aufarbeitung als Schlagzähigkeitsmodifikator in Epoxidharzzusammensetzungen eingesetzt werden, wie später im Einzelnen erläutert. Unter den Härtungsbedingungen von Epoxidharzzusammensetzungen können die aromatischen Schutzgruppen des blockierte Isocyanatgruppen aufweisenden Polyurethan-Polymers abgespalten werden, wodurch die entblockierten Isocyanatgruppen mit im Epoxidharz enthaltenen Hydroxylgruppen reagieren können. Durch diese sogenannte Vernetzungsreaktion mit dem Epoxidharz das Alterungs- und Schlagzähverhalten des gehärteten Produkts verbessert werden.

Das erhaltene blockierte Isocyanatgruppen aufweisende Polyurethan-Polymer wird weiter mit mindestens einem Epoxidharz umgesetzt, gegebenenfalls in Anwesenheit eines Katalysators.

Die erhaltene Reaktionsmischung mit dem blockierte Isocyanatgruppen aufweisenden Polyurethanpolymer kann ohne weitere Aufbereitung für den optionalen dritten Schritt eingesetzt werden. Das Epoxidharz kann somit nach Abreaktion direkt in die Reaktionsmischung der zweiten Stufe gegeben werden.

Das Epoxidharz kann wie bereits vorstehend erläutert z.B. mindestens ein Epoxid-Festharz, mindestens ein Epoxid-Flüssigharz oder mindestens ein Novolak-Epoxidharz oder eine Mischung dieser Epoxidharze sein. Es können z.B. eine Mischung von mindestens einem Epoxid-Festharz mit mindestens einem Novolak-Epoxidharz oder eine Mischung von mindestens einem Epoxid-Festharz mit mindestens einem Epoxid-Flüssigharz eingesetzt werden. Es können auch Mischungen von mindestens einem Epoxid-Festharz mit mindestens einem Epoxid-Flüssigharz eingesetzt werden.

Das mindestens eine Epoxidharz wird bezüglich des blockierte Isocyanatgruppen aufweisenden Polyurethan-Polymers vorzugsweise in einer solchen Menge eingesetzt, dass ein stöchiometrischer Überschuss an Epoxidgruppen (Epoxirangruppen) zu Hydroxylgruppen, insbesondere phenolischen Hydroxylgruppen, vorliegt, wobei das molare Verhältnis von Epoxidgruppen zu Hydroxylgruppen, insbesondere phenolischen Hydroxylgruppen, bevorzugt mindestens 2:1 beträgt und bevorzugter im Bereich von 3:1 bis 10:1 liegt.

Derartige Umsetzungen von blockierten Polyisocyanaten mit Epoxidharzen sowie die Reaktionsbedingungen hierfür sind dem Fachmann gut vertraut. Typischerweise erfolgt die Umsetzung bei höheren Temperaturen, z.B. bei mindestens 100 °C, bevorzugt im Bereich von 110 bis 130 °C. Gegebenenfalls werden für die Reaktion geeignete Katalysatoren eingesetzt. Beispiele für geeignete Katalysatoren sind Phosphine, wie z.B. Triphenylphosphin (TPP), z.B. in einem Anteil von 0,05 - 0,1 Gew.-%, bezogen auf das Gesamtgewicht der Reaktionsmischung.

Die Reaktionsdauer kann z.B. in einem Zeitraum von 2 bis 5 h liegen. Die Reaktionskontrolle erfolgt über Titration von Epoxid.

Bei der Umsetzung der Epoxidharze mit dem blockierte Isocyanate aufweisenden Polyurethan-Polymer findet eine zumindest teilweise Abspaltung der aromatischen Schutzgruppen und Reaktion der freigesetzten Isocyanatgruppe mit dem Epoxidharz statt. Die Reaktion findet dabei in der Regel mit Hydroxylgruppen im Epoxidharz statt.

In einer optionalen Ausführungsform kann das erhaltene Reaktionsprodukt von dem mindestens einen Epoxidharz mit dem blockierte Isocyanatgruppen aufweisenden Polyurethan-Polymer zusätzlich zumindest teilweise, bevorzugt teilweise, mit einem Carboxylgruppen aufweisenden Polymer, bevorzugt einem mit Carboxylgruppen terminierten Butadien/Acrylnitril-Copolymer, modifiziert sein, welches vorzugsweise ein Flüssigkautschuk ist.

Das Reaktionsprodukt von dem mindestens einen Epoxidharz mit dem blockierte Isocyanatgruppen aufweisenden Polyurethan-Polymer wird vorzugsweise im Überschuss mit dem Carboxylgruppen aufweisenden Polymer, bevorzugt einem mit Carboxylgruppen terminierten Butadien/Acrylnitril-Copolymer, modifiziert, d.h. ein stöchiometrischer Überschuss der Epoxidgruppen im eingesetzten Epoxidharz gegenüber den Carboxylgruppen des Polymers. Das molare Verhältnis von Epoxidgruppen zu Carboxylgruppen ist dabei bevorzugt größer gleich 2 : 1 und bevorzugter größer gleich 4 : 1.

Durch den Überschuss an Epoxidgruppen wird gewährleistet, dass die Carboxylgruppen des Polymers vollständig umgesetzt werden, was zu einer verbesserten Lagerstabilität des Produkts und auch zu einer Verbesserung der physikalischen Eigenschaften führt.

Wie bereits vorstehend erläutert kann die Modifizierung erfolgen, indem das blockierte Isocyanatgruppen aufweisenden Polyurethan-Polymer in Mischung mit dem Carboxylgruppen aufweisenden Polymer, bevorzugt einem mit Carboxylgruppen terminierten Butadien/Acrylnitril-Copolymer, mit dem Epoxidharz umgesetzt wird oder indem das Reaktionsprodukt von dem mindestens einen Epoxidharz mit dem blockierte Isocyanatgruppen aufweisenden Polyurethan-Polymer anschließend mit dem Carboxylgruppen aufweisenden Polymer, bevorzugt einem mit Carboxylgruppen terminierten Butadien/Acrylnitril-Copolymer, umgesetzt wird.

Sofern die Umsetzung des Reaktionsprodukts mit dem Carboxylgruppen aufweisenden Polymer erfolgen soll, kann die erhaltene Reaktionsmischung mit dem Reaktionsprodukt ohne weitere Aufbereitung mit dem Carboxylgruppen aufweisenden Polymer umgesetzt werden.

Typischerweise erfolgt die Umsetzung mit dem Carboxylgruppen aufweisenden Polymer bei höheren Temperaturen, z.B. mindestens 90 °C, bevorzugt im Bereich von 100 bis 120°C. Gegebenenfalls werden für die Umsetzung zusätzliche Katalysatoren eingesetzt. Geeignete Katalysatoren sind z.B. auch hier Phosphine, wie z.B. TPP. Die Reaktionsdauer kann z.B. in einem Zeitraum von 2 bis 7 h liegen. Die Reaktionskontrolle erfolgt über Titration von Epoxid.

In dem folgenden Reaktionsschema 3 ist schematisch ein Umsetzungsprodukt zwischen dem gebildeten Reaktionsprodukt und einem Carboxylgruppen-terminierten Polymer bzw. dem mit dem Carboxylgruppen-terminierten Polymer modifizierten Reaktionsprodukt veranschaulicht. Bei dem Reaktionsprodukt handelt es sich um das Reaktionsprodukt mit Diglycidylether von Bisphenol A (BADGE) als Epoxidharz.

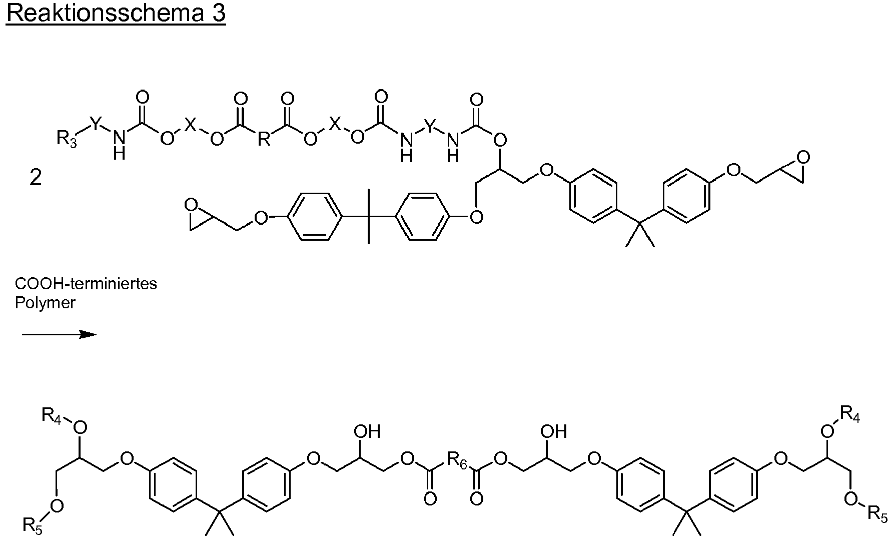

Die Platzhalter R, X und Y sind dabei wie in Reaktionsschema 1 definiert. R₆ ist der zweiwertige Rest eines Carboxylgruppen terminierten Butadien/Acrylnitril-Copolymers nach Entfernung der terminalen Carboxylgruppen. R₃, R₄ und R₅ repräsentieren vereinfacht den Rest der Polymerkette bzw. den Rest des Epoxidharzmoleküls.

Das wie vorstehend beschrieben erhaltene Polymer, d.h. das Reaktionsprodukt von dem mindestens einen Epoxidharz mit dem blockierte Isocyanatgruppen aufweisenden Polyurethan-Polymer, welches gegebenenfalls zusätzlich zumindest teilweise mit einem Carboxylgruppen aufweisenden Polymer modifiziert worden ist, enthält Epoxidgruppen. Dieses Polymer kann ebenfalls wie es ist ohne weitere Aufarbeitung als Schlagzähigkeitsmodifikator in Epoxidharzzusammensetzungen eingesetzt werden, wie später im Einzelnen erläutert. Diese Reaktionsprodukte mit Epoxidharzen kombinieren die gute Flexibilisierung als Schlagzähigkeitsmodifikator mit einer guten Reaktivität gegenüber der Epoxidmatrix, wenn sie in Epoxidharzzusammensetzungen eingesetzt werden.

Unter Schlagzähigkeitsmodifikatoren werden im allgemeinen Stoffe oder Verbindungen verstanden, welche in einer Polymermatrix eingesetzt werden, um dieser Polymermatrix die Fähigkeit zu verleihen bzw. die Fähigkeit dieser Polymermatrix zu verbessern, Stoss- und Schlagenergie zu absorbieren, ohne dabei zu brechen oder einen sonstigen Schaden zu nehmen.

Die erfindungsgemäßen Polymere werden in Epoxidharzzusammensetzungen eingesetzt, in welche diese Polymere bei der Härtung der Epoxidharzzusammensetzungen einreagieren können. Das blockierte Isocyanatgruppen aufweisende Polyurethan-Polymer spaltet wie beschrieben unter den Härtungsbedingungen für die Epoxidharzzusammensetzung die Schutzgruppe ab. Die dadurch freigesetzten Isocyanatgruppen können mit den Hydroxylgruppen des Epoxidharzes reagieren, oder mit dem Härter, wie Dicyandiamid (Dicy), in der Endformulierung.

In einem weiteren Aspekt geht die Erfindung aus von einer ein- oder zweikomponentigen Epoxidharzzusammensetzung umfassend
a) mindestens ein wie vorhergehend beschriebenes erfindungsgemässes Polymer oder mindestens ein Polymer, welches ein blockierte Isocyanatgruppen aufweisendes Polyurethan-Polymer ist, wobei das blockierte Isocyanatgruppen aufweisende Polyurethan-Polymer ein Additionsprodukt aus mindestens einem Polyisocyanat und mindestens einem Polyesterpolyol ist, wobei die Isocyanatgruppen des Additionsprodukts durch Umsetzung mit mindestens einer aromatischen Verbindung, die eine oder zwei phenolische OH-Gruppen aufweist, blockiert sind, und
   wobei das Polyesterpolyol aus mindestens einem C₃-C₁₂-Diol und mindestens einer aliphatischen oder aromatischen C₃-C₁₅-Dicarbonsäure oder deren Methylester gebildet ist;
b) mindestens ein Epoxidharz; sowie
c) mindestens einen Härter für Epoxidharze.

Das erfindungsgemäße Polymer, das als Schlagzähigkeitsmodifikator in der ein- oder zweikomponentigen Epoxidharzzusammensetzung eingesetzt wird, wurde vorstehend beschrieben. Es können gegebenenfalls auch Mischungen verschiedener erfindungsgemäßer Polymere eingesetzt werden.

Der Anteil des erfindungsgemäßen Polymers beträgt bevorzugt 10 bis 50 Gew.-%, bevorzugter 20 bis 40 Gew.-%, bezogen auf das Gesamtgewicht der ein- oder zweikomponentigen Epoxidharzzusammensetzung ohne Füllstoffanteil, d.h. ohne das Gewicht von gegebenenfalls in der der ein- oder zweikomponentigen Epoxidharzzusammensetzung vorhandenen Füllstoffen.

Die Epoxidharzzusammensetzung kann einkomponentig (1K) oder zweikomponentig (2K) sein. Bei der einkomponentigen Epoxidharzzusammensetzung sind alle Bestandteile in einer Komponente gemischt, während bei der zweikomponentigen Epoxidharzzusammensetzung die Bestandteile in zwei separaten Komponenten aufgeteilt sind, die erst vor Gebrauch miteinander vermischt werden. 1K- und 2K-Epoxidharzzusammensetzungen sind dem Fachmann bestens vertraut und im Handel in großer Vielfalt erhältlich. Angaben zur Epoxidharzzusammensetzung beziehen sich immer sowohl auf die einkomponentige als auch auf die zweikomponentige Epoxidharzzusammensetzung, sofern nicht ausdrücklich anders angegeben.

Das Epoxidharz kann z.B. mindestens ein Epoxid-Festharz oder mindestens ein Epoxid-Flüssigharz oder eine Mischung von mindestens einem Epoxid-Festharz und mindestens einem Epoxid-Flüssigharz sein. Gegebenenfalls kann auch mindestens ein Novolak-Epoxidharz als Epoxidharz eingesetzt werden, in der Regel wird ein Novolak-Epoxidharz aber in Kombination mit mindestens einem Epoxid-Festharz und/oder mindestens einem Epoxid-Flüssigharz verwendet. In einer bevorzugten Ausführungsform umfasst oder ist das Epoxidharz mindestens ein Epoxid-Festharz.

Dem Fachmann ist klar, dass die Epoxidharze, die zur Herstellung der erfindungsgemäßen Polymere eingesetzt werden, d.h. zur Herstellung des Reaktionsprodukts mit dem Epoxidharz, und die Epoxidharze, die in der Epoxidharzzusammensetzung verwendet werden, unabhängig voneinander ausgewählt sein können.

Als Epoxid-Festharze eignen sich insbesondere Epoxid-Festharze der Formel (III), die vorstehend bereits beschrieben worden sind, worauf Bezug genommen wird.

Bevorzugte Epoxid-Festharze weisen eine Glasübergangstemperatur T_{G} von ≥ 25 °C, insbesondere von ≥ 30 °C, auf. Sie lassen sich typischerweise herstellen aus der Umsetzung von Verbindungen der Formel HO-D-OH mit Epichlorhydrin und/oder 2-Methyl-epichlorhydrin, wobei D wie bereits vorhergehend in der Formel (III) beschrieben definiert ist, in der Praxis in der Regel aus Bisphenol-A-diglycidylether (A-Harz) und BPA.

Derartige Epoxid-Festharze sind z.B. kommerziell erhältlich unter den Handelsnamen Araldite^{®} GT 7071 oder Araldite^{®} GT 7004 von der Firma Huntsman International, LLC, USA. Weitere geeignete Epoxid-Festharze sind z.B. kommerziell erhältlich von The Dow Chemical Company, USA, oder von Hexion Specialty Chemicals Inc, USA.

Weiterhin können modifizierte Epoxid-Festharze, insbesondere fettsäuremodifizierte Epoxid-Festharze verwendet werden, wie sie beispielsweise unter dem Handelsnamen Araldite^{®} GT 6404 von der Firma Huntsman International, LLC, USA, kommerziell erhältlich sind.

Der Anteil des Epoxid-Festharzes beträgt vorzugsweise 30 bis 90 Gew.-%, insbesondere 35 bis 85 Gew.-%, bevorzugt 40 bis 75 Gew.-%, bezogen auf das Gesamtgewicht der ein- oder zweikomponentigen Epoxidharzzusammensetzung.

Als Epoxid-Flüssigharze eignen sich insbesondere Epoxid-Flüssigharze der Formel (IV), die vorstehend bereits beschrieben worden sind, worauf Bezug genommen wird. Sofern Epoxid-Flüssigharze als Hauptkomponente des Epoxidharzes eingesetzt werden, kann der Anteil des Epoxid-Flüssigharzes vorzugsweise 10 bis 70 Gew.-%, insbesondere 15 bis 65 Gew.-%, bevorzugt 20 bis 60 Gew.-%, bezogen auf das Gesamtgewicht der ein- oder zweikomponentigen Epoxidharzzusammensetzung betragen.

In der Regel ist es aber bevorzugt, dass mindestens ein Epoxid-Festharz als Hauptkomponente des Epoxidharzes eingesetzt wird, vorzugsweise in den vorstehend angegebenen Mengen. In diesen Fällen wird Epoxid-Flüssigharz, wenn überhaupt, bevorzugt in deutlich geringeren Mengen zusätzlich verwendet, wie nachstehend angegeben.

Weiterhin kann die Epoxidharzzusammensetzung zusätzlich mindestens ein Novolak-Epoxidharz enthalten, welches vorstehend bereits beschrieben worden ist, worauf Bezug genommen wird.

Sofern mindestens ein Epoxid-Festharz als Hauptkomponente des Epoxidharzes verwendet wird, vorzugsweise in den vorstehend angegebenen Anteilen, ist es bevorzugt, dass der Anteil des Epoxid-Flüssigharzes oder des Phenolharzes vorzugsweise 0,1 bis 20 Gew.-%, vorzugsweise 0,1 bis 15 Gew.-%, insbesondere 0,1 bis 5 Gew.-%, bezogen auf das Gesamtgewicht der ein- oder zweikomponentigen Epoxidharzzusammensetzung.

Weiterhin umfasst die Epoxidharzzusammensetzung insbesondere mindestens einen Härter für Epoxidharze. Der Härter enthält insbesondere gegenüber Epoxidgruppen reaktive Gruppen und liegt vorzugsweise in blockierter Form oder kristallin als in Epoxiden schwerlösliche Verbindung vor. Bevorzugt wird der Härter durch erhöhte Temperatur aktiviert.

Beispiele für geeignete Härter sind Amine wie aliphatische, cycloaliphatische, aromatische oder araliphatische, bevorzugt primäre oder sekundäre, Amine und Polyamine; Addukte und Polyalkoxylierungsprodukte von Polyaminen; aminterminierte Polyalkylenglykole; Polyphenole wie Phenol- oder Kresolnovolake, Addukte von Monophenolen oder Polyphenolen mit Polyamiden; Polyamide, besonders solche, die sich ableiten von aliphatischen Polyaminen und dimerisierten oder trimerisierten Fettsäuren; Polysulfide; Anilinformaldehyde; mehrwertige Phenole; mehrwertige Carbonsäuren und ihre Anhydride.

Bevorzugte Härter sind ausgewählt ist aus der Gruppe bestehend aus Dicyandiamid, Guanamin, Guanidin, Aminoguanidin und deren Derivate. Besonders bevorzugt ist der Härter Dicyandiamid.

Weiterhin möglich sind beschleunigend wirksame Härter, wie substituierte Harnstoffe, beispielsweise 3-(3-Chlor-4-methylphenyl)-1,1-dimethylharnstoff (Chlortoluron), N,N-Dimethylharnstoff oder Phenyl-Dimethylharnstoffe, insbesondere 3-(p-Chlorphenyl)-1,1-dimethylharnstoff (Monuron), 3-Phenyl-1,1-dimethylharnstoff (Fenuron) oder 3-(3,4-Dichlorphenyl)-1,1-dimethylharnstoff (Diuron). Weiterhin können Verbindungen der Klasse der Imidazole, Imidazoline und Amin-Komplexe eingesetzt werden.

Der Härter wird vorzugsweise in einer ungefähr stöchiometrischen Menge bezogen auf die Epoxidgruppen in der Epoxidharzzusammensetzung eingesetzt. Das molare Verhältnis der Epoxidgruppen zum aktiven Wasserstoff des Härters beträgt vorzugsweise 0,8 bis 1,2, insbesondere 0,9 bis 1,1, bevorzugt 0,95 bis 1,05. Der Anteil des Härters beträgt bevorzugt 0,05 bis 30 Gew.-%, insbesondere 0,1 bis 15 Gew.-%, bevorzugt 0,2 bis 5 Gew.-%, bezogen auf das Gesamtgewicht der ein- oder zweikomponentigen Epoxidharzzusammensetzung.

In einer bevorzugten Ausführungsform handelt es sich bei der Epoxidharzzusammensetzung um eine schäumbare Epoxidharzzusammensetzung. In diesem Fall kann die Epoxidharzzusammensetzung zusätzlich mindestens ein chemisches oder physikalisches Treibmittel enthalten.

Als chemische Treibmittel werden organische oder anorganische Substanzen bezeichnet, welche unter Einfluss von Temperatur, Feuchtigkeit, elektromagnetischer Strahlung oder Chemikalien gasförmige Substanzen bilden oder abspalten. Derartige Substanzen sind z.B. Azodicarbonamide, Sulfohydrazide, Hydrogencarbonate oder Carbonate.

Als physikalische Treibmittel können Verbindungen eingesetzt werden, welche z.B. bei Änderung der Temperatur, des Drucks oder des Volumens, insbesondere bei Erhöhung der Temperatur, in den gasförmigen Aggregatzustand übergehen und so durch Volumenexpansion eine Schaumstruktur bilden. Insbesondere sind solche physikalischen Treibmittel Flüssigkeiten, welche bei erhöhter Temperatur verdampfen. Weiterhin können als physikalische Treibmittel Gase oder niedrigsiedende Flüssigkeiten eingesetzt werden, welche in mikroverkapselter Form in die Zusammensetzung eingebracht werden. Sowohl chemische als auch physikalische Treibmittel sind in der Lage Schaumstrukturen in Polymerzusammensetzungen zu erzeugen.

Bevorzugte Treibmittel sind chemische Treibmittel, die unter Einfluss von Temperatur zu einer Schäumung der Zusammensetzung führen. Die für die Schäumung erforderliche Wärme kann dabei durch externe Wärmequellen wie z.B. Lagerung in einem Ofen, Kontaktieren mit elektrischen Wärmeelementen, Mikrowellenstrahlung, Induktionsheizung und dergleichen, oder durch interne Wärmequellen wie beispielsweise durch eine exotherme chemische Reaktion eingebracht werden.

Geeignete Treibmittel sind beispielsweise kommerziell erhältlich unter dem Handelsnamen Expancel^{®} von der Firma Akzo Nobel, Niederlande, unter dem Handelsnamen Gelogen^{®} von der Firma Chemtura Corp., USA, oder unter dem Handelsnamen Luvopor^{®} von der Firma Lehmann & Voss & Co. KG, Deutschland.

Die Zusammensetzung kann weiterhin gegebenenfalls zusätzliche feste Zähigkeitsverbesserer enthalten. Unter einem "Zähigkeitsverbesserer" wird hierbei und im Folgenden ein Zusatz zu einer Epoxidharzmatrix verstanden, der bereits bei geringen Zuschlägen von 0,1 bis 15 Gew.-%, insbesondere von 0,5 bis 8 Gew.-%, bezogen auf das Gesamtgewicht der Epoxidharzusammensetzung, eine deutliche Zunahme der Zähigkeit bewirkt und somit in der Lage ist, höhere Biege-, Zug-, Schlag- oder Stossbeanspruchung aufzunehmen, bevor die Matrix einreisst oder bricht.

Derartige feste Zähigkeitsverbesserer sind beispielsweise organische ionengetauschte Schichtminerale, wie sie dem Fachmann unter den Begriffen Organoclay oder Nanoclay bekannt sind; Blockcopolymere, insbesondere der Monomere Styrol, Butadien, Acrylnitril und Methylmethacrylat; amorphes Siliciumdioxid; oder Core-Shell Polymere. Als fester Zähigkeitsverbesserer kann vorzugsweise ein Core-Shell Polymer eingesetzt werden.

Core-Shell-Polymere bestehen aus einem elastischen Kernpolymer (Core) und einem starren Schalen-Polymer (Shell). Besonders geeignete Core-Shell-Polymere bestehen aus einem Kern aus elastischem Acrylat- oder Butadien-Polymer, welcher von einer starren Schale eines starren thermoplastischen Polymers umhüllt ist.

Bevorzugte Core-Shell-Polymere sind sogenannte MBS Polymere, welche kommerziell unter dem Handelsnamen Clearstrength^{®} von Arkema, Inc., USA, Paraloid^{®} von Rohm and Haas Co., USA, oder F-351^{™} von Zeon Chemicals L.P., USA, erhältlich sind.

Besonders bevorzugt sind Core-Shell-Polymerpartikel, die bereits als getrockneter Polymerlatex vorliegen. Beispiele hierfür sind GENIOPERL^{®} M23A von Wacker Chemie AG, Deutschland, mit Polysiloxankern und Acrylatschale, strahlungsvernetzte Kautschukpartikel der NEP Reihe, hergestellt von Eliokem, Inc., USA, oder Nanopren^{®} von Lanxess AG, Deutschland, oder Paraloid^{®} EXL von Rohm and Haas Co., USA. Weitere vergleichbare Beispiele für Core-Shell-Polymere werden unter dem Handelsamen Albidur^{®} von Nanoresins AG, Deutschland, angeboten.

Vorteilhaft beträgt der Anteil des festen Core-Shell Polymers 0,1 bis 15 Gew.-%, vorzugsweise 0,1 bis 8 Gew.-%, insbesondere 0,1 bis 5 Gew.-%, bezogen auf das Gesamtgewicht der Epoxidharzzusammensetzung.

Weiterhin kann die Epoxidharzzusammensetzung gegebenenfalls zusätzlich mindestens einen Füllstoff umfassen. Bevorzugt handelt es sich hierbei um einen Füllstoff, welcher ausgewählt ist aus der Gruppe bestehend aus Russ, Glimmer, Talk, Kaolin, Wollastonit, Feldspat, Syenith, Chlorit, Schichtsilikate wie beispielsweise Bentonite oder Montmorillonite, Calciumcarbonat (gefällt oder gemahlen), Dolomit, Quarz, Kieselsäuren (pyrogen oder gefällt), Cristobalit, Calciumoxid, Aluminiumhydroxid, Magnesiumoxid, Keramikhohlkugeln, Glashohlkugeln, organische Hohlkugeln, Glaskugeln, Farbpigmente, Glasfasern, Kunststofffasern und Kohlefasern. Als Füllstoff sind sowohl die organisch modifizierten als auch die unbehandelten kommerziell erhältlichen und dem Fachmann bekannten Formen gemeint.

Vorteilhaft beträgt der Anteil des Füllstoffs 3 bis 50 Gew.-%, vorzugsweise 5 bis 40 Gew.-%, insbesondere 8 bis 35 Gew.-%, bezogen auf das Gesamtgewicht der ein- oder zweikomponentigen Epoxidharzzusammensetzung.

Weiterhin kann die Epoxidharzzusammensetzung gegebenenfalls nicht-reaktive thermoplastische Polymere, wie beispielsweise Homo- oder Copolymere von ungesättigten Monomeren, insbesondere von ungesättigten Monomeren enthalten, welche ausgewählt sind aus der Gruppe bestehend aus Ethylen, Propylen, Butylen, Isobutylen, Isopren, Vinylacetat oder höhere Ester davon, und (Meth)acrylat, wobei Ethylenvinylacetat-Copolymere (EVA), ataktische Poly-α-Olefine (APAO), Polypropylene (PP) und Polyethylene (PE) besonders geeignet sind. Weitere geeignete nicht-reaktive thermoplastische Polymere sind Polyester, Polyamide, Polystyrol, Polymethylmethacrylat, thermoplastische Polyurethane oder Polyetherester wie sie beispielsweise unter dem Handelsnamen Hytrel^{®} von der Fima DuPont, USA, kommerziell erhältlich sind.

Die Epoxidharzzusammensetzung kann gegebenenfalls weitere Bestandteile, z.B. Katalysatoren, Reaktivverdünner, Hitze- und/oder Lichtstabilisatoren, Thixotropiermittel, Weichmacher, Lösungsmittel, Farbstoffe und/oder Pigmente, umfassen.

Die erfindungsgemäßen Epoxidharzzusammensetzungen können vor der Aushärtung z.B. pastös sein oder auch in fester Form vorliegen. Die Härtung der Epoxidharzzusammensetzungen erfolgt wie üblich bei Raumtemperatur oder erhöhter Temperatur unter Bildung des gehärteten Epoxidharzes, vorzugsweise erfolgt eine Hitzehärtung. Bei den schäumbaren Epoxidharzzusammensetzungen findet vor und/oder während der Härtung eine Schaumbildung statt, so dass ein geschäumtes gehärtetes Epoxidharz gebildet wird, insbesondere ein Strukturschaum.

Die erfindungsgemäßen Epoxidharzzusammensetzungen eignen sich z.B. als Klebstoffe, Dichtstoffe oder als Zusammensetzungen zur Herstellung von Beschichtungen, insbesondere als Strukturklebstoffe. Besonders bevorzugt eignen sich die Epoxidharzzusammensetzungen als 1 K-Strukturklebstoffe, 2K-Klebstoffe und schäumbare Zusammensetzungen für Strukturschäume.

Weiterhin eignen sich die erfindungsgemäßen Epoxidharzzusammensetzungen als schäumbare, hitzehärtende Zusammensetzungen, welche als Strukturschäume in Schottteilen zur Dichtung und/oder Geräuschdämmung oder als Verstärkungsteile zur Verstärkung in Hohlräumen von strukturellen Bauteilen und Verstärkungselementen, insbesondere im Fahrzeugbau, eingesetzt werden. Als Substrate eignen sich dabei insbesondere metallische Oberflächen. Dem Fachmann sind solche Systeme unter den Begriffen "Baffle" und "Reinforcer" bekannt.

Insbesondere für den Einsatz als schäumbares Material, insbesondere als schäumbares, hitzehärtendes Material, für Baffle- und Reinforcer-Anwendungen haben sich die erfindungsgemäßen Epoxidharzzusammensetzungen als besonders vorteilhaft erwiesen, da sie eine sehr gute Haftung auf metallischen Oberflächen aufweisen, und in ihrem Alterungsverhalten eine generelle Steigerung der Resistenz gegenüber Korrosion, insbesondere gegenüber Unterwanderungskorrosion, aufweisen.

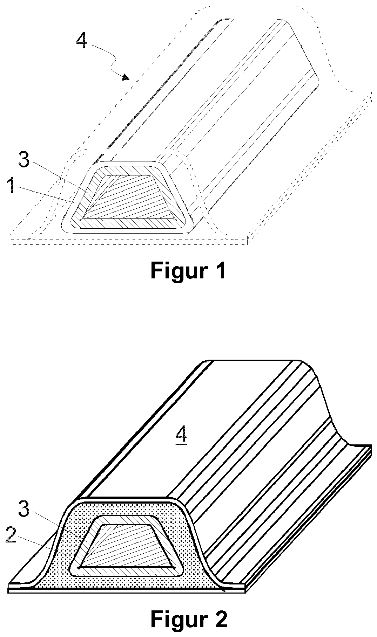

In den Figuren 1 und 2 ist ein Beispiel für eine solche Anwendung der vorliegenden Erfindung gemäß vorhergehender Beschreibung schematisch dargestellt.

Figur 1 zeigt ein Verstärkungsteil (Reinforcer), wie es in einem Hohlraum eines strukturellen Bauteils 4 eingesetzt wird vor der Schäumung der in dieser Ausführungsform schäumbaren Epoxidharzzusammensetzung 1, welche sich auf einem Trägerteil 3 befindet. Im Fahrzeugbau werden derartige Verstärkungsteile beim Zusammenbau der Karosserie an Stellen, welche später besonders hohen Belastungen ausgesetzt sind, eingesetzt und beispielsweise mittels eines Clips oder dergleichen an der Karosserie befestigt. Bei der Aushärtung der kathodischen Tauchlackierung (KTL) in einem Ofen schäumt die schäumbare Zusammensetzung auf, verklebt mit dem Bauteil und härtet dann aus.

Figur 2 zeigt ein Verstärkungsteil, wie es in einem Hohlraum eines strukturellen Bauteils 4 eingesetzt ist. Das schäumbare Material 2 aus der Epoxidharzzusammensetzung ist in diesem Fall bereits vollständig ausgeschäumt und füllt den Hohlraum zwischen dem Trägerteil 3 und dem strukturellen Bauteil 4 vollständig aus.

In einem weiteren Aspekt umfasst die vorliegende Erfindung die Verwendung der vorhergehend beschriebenen erfindungsgemässen Polymere oder eines Polymers, welches ein blockierte Isocyanatgruppen aufweisendes Polyurethan-Polymer ist, wobei das blockierte Isocyanatgruppen aufweisende Polyurethan-Polymer ein Additionsprodukt aus mindestens einem Polyisocyanat und mindestens einem Polyesterpolyol ist, wobei die Isocyanatgruppen des Additionsprodukts durch Umsetzung mit mindestens einer aromatischen Verbindung, die eine oder zwei phenolische OH-Gruppen aufweist, blockiert sind, und
wobei das Polyesterpolyol aus mindestens einem C₃-C₁₂-Diol und mindestens einer aliphatischen oder aromatischen C₃-C₁₅-Dicarbonsäure oder deren Methylester gebildet ist, als Schlagzähigkeitsmodifikatoren in einer ein- oder zweikomponentigen Epoxidharzzusammensetzung.

Die Zusammensetzung und die Verwendungsmöglichkeiten der erfindungsgemäßen ein- oder zweikomponentigen Epoxidharzzusammensetzung wurden bereits vorstehend beschrieben, worauf Bezug genommen wird. Wie gesagt eignet sich die Verwendung insbesondere für Epoxidharzzusammensetzungen, die als Klebstoff oder schäumbare Epoxidharzzusammensetzung, insbesondere als 1 K-Strukturklebstoffe, 2K-Klebstoffe und schäumbare Zusammensetzungen für Strukturschäume, eingesetzt werden.

Die erfindungsgemäße Verwendung der Polymere in der Epoxidharzzusammensetzung eignet sich auch insbesondere zur Verbesserung der Korrosionsbeständigkeit des Haftverbunds zwischen Substrat und der darauf applizierten und gehärteten Epoxidharzzusammensetzung. Dies bezieht sich auf die Haftbeständigkeit zwischen einem Substrat, insbesondere einem metallischen Substrat, und der darauf applizierten und gehärteten Epoxidharzzusammensetzung. Die mit der Zeit auftretende Korrosion im Bereich zwischen der Substratoberfläche und der Epoxidharzzusammensetzung ("Unterwanderungskorrosion") kann die Klebeverbindung schwächen und zu einem adhäsiven Bruch des Haftverbunds führen.

Die Korrosionsbeständigkeit kann z.B. durch den Abfall der Zugscherfestigkeit nach 7-tägiger Kataplasma-Lagerung ermittelt werden. Der geringere Haftungsabfall bei den erfindungsgemäßen Beispielen ist auf die geringere Unterwanderungskorrosion und damit einer verbesserten Korrosionsbeständigkeit zurückzuführen.

Sofern die Epoxidharzzusammensetzung Treibmittel enthält bzw. eine schäumbare Epoxidharzzusammensetzung ist, eignet sich die erfindungsgemäße Verwendung der Polymere in der Epoxidharzzusammensetzung auch überraschenderweise für eine Verbesserung der vertikalen Expansion der Epoxidharzzusammensetzung.

Eine verstärkte vertikale Expansion ist von Vorteil, da dann weniger Treibmittel in der Epoxidharzzusammensetzung nötig ist, um den gewünschten Spalt oder Hohlraum zu verfüllen, und eine höhere Stabilität erreicht wird.

### Beispiele

### Abkürzungen

- MG: mittleres Molekulargewicht
- Smp.: Schmelzpunkt
- OHZ: OH-Zahl
- SZ: Säurezahl
- BPA: Bisphenol A
- EEW: Epoxidequivalentgewicht

Alle Mengenangaben beziehen sich auf Gewichtsteile soweit nicht anders angegeben.

Folgende Produkte/Verbindungen wurden in den Beispielen verwendet

| | | |
|---|---|---|
| PTHF 650 | Polyether, Polytetrahydrofuran, Mw: 625-675 g/mol | BASF |
| Dynacoll^{®}7330 | Teilkristallines Polyesterpolyol, MG: 3500, Smp. 85°C, OHZ: 27-34 mgKOH/g, SZ: < 2 mgKOH/g | Evonik Industries |
| Dynacoll^{®}7331 | Teilkristallines Polyesterpolyol, MG: 3500, Smp. 110°C, OHZ: 27-34 mgKOH/g, SZ: < 2 mgKOH/g | Evonik Industries |
| Dynacoll^{®}7490 | Polyesterpolyol | Evonik Industries |
| Dynacoll^{®}7340 | Teilkristallines Polyesterpolyol, MG: 3500, Smp. 96 °C, OHZ: 27-34 mgKOH/g, SZ: < 2 mgKOH/g | Evonik Industries |
| EP431.01 | Polyesterpolyol, Smp. 110°C, OHZ: 30 mgKOH/g, SZ: 0,3 mgKOH/g (Versuchsprodukt) | |
| EP431.02 | Polyesterpolyol, Smp. 116°C, OHZ: 28 mgKOH/g, SZ: 0,9 mgKOH/g (Versuchsprodukt) | |
| IPDI | Isophorondiisocyanat | |
| Hypro X13 | HYPRO^{®} CTBN 1300X13, Flüssigkautschuk, COOH-terminiertes Butadien/Acrylnitril-Copolymer | Emerald |
| GT 7071 | Araldite^{®}GT 7071, BPA-Epoxid-Festharz | Huntsman |
| GT 7004 | Araldite^{®}GT 7004, BPA-Epoxid-Festharz | Huntsman |
| DEN 431 | D.E.N. ^{®}431, Epoxy-Novolak-Harz | Dow |
| DEN 438 | D.E.N. ^{®}438, Epoxy-Novolak-Harz | Dow |
| BFDGE | Diglycidylether von Bisphenol F, Epoxid-Flüssigharz | |
| BADGE | Diglycidylether von Bisphenol A, Epoxid-Flüssigharz | |
| PPh3 | Triphenylphosphin | |
| DBTL | Dibutylzinndilaurat | |
| Cardolite NC700 | 3-Pentadecenylphenol (aus Cashewnuss-Schalen-Öl) | Cardiolite Corporation |
| Bisphenol-A | 2,2-Bis-(4-hydroxyphenyl)-propan | |
| Dicy | Dicyandiamid | |
| Faser | Verstärkungsfaser | |
| Luvopor | Luvopor OB, Treibmittel | Lehmann & Voss & Co. |
| SiO2 | pyrogene Kieselsäure, Thixotropiermittel | |
| CaCO3 | Calciumcarbonat, Füllstoff | |
| Talk | Talk, Füllstoff | |
| GHK | Glashohlkugeln, zur Gewichtsreduktion | |
| Expancel | Expancel 950 DU120, physikalisches Treibmittel | AkzoNobel |
| Kat 1 | Katalysator für Dicy | |

### Herstellung der Polymere P1 bis P12

Für die Herstellung der Polymere **P1** bis **P12** wurden die in Tabelle 1 angegebenen Verbindungen in den angeführten Gewichtsanteilen verwendet. Als Polymer **P1** wurde das angegebene Polyesterpolyol verwendet. Nachstehend wird die Versuchsdurchführung beispielhaft für das Beispiel **P6** angegeben.

### Herstellungsverfahren Polymer P6

### Stufe 1:

375g des Polyesters (Dynacoll 7330) wurden aufgeschmolzen und mit 51,47g Polyisocyanat (IPDI) im Reaktionsgefäß gemischt. Der Katalysator (DBTL) wurde zugegeben (0,148g) und die Mischung unter Rühren für 90 Minuten auf 120 °C erhitzt. Der nun gemessene NCO-Gehalt lag bei 2,38% (Theorie 2.37%). Nun kann das Phenol (Bisphenol-A) zugesetzt werden (66,03g) und die Temperatur wurde wiederum unter Rühren auf 140°C erhöht. Nach 6 Stunden wurde erneut der freie NCO-Gehalt bestimmt (Ergebnis 0,13%). Die Reaktion war abgeschlossen und man erhielt 492,5g des Polymers. Dieses wurde abgefüllt und auf Raumtemperatur abgekühlt.

### Stufe 2:

150g des Polymers aus Stufe 1 wurden mit je 100g Hypro X13 CTBN (COOH-term.- Polymer) und 100g Cardolite NC700, sowie Epoxidharz (je 300g vom DEN 438 und GT7071) unter Zugabe von 0,5g Katalysator (Triphenylphosphin) für 8,5h bei 120°C unter Rühren erhitzt. Danach wurde eine Epoxy-Zahl von 1,72g/mol gemessen und die Reaktion war abgeschlossen. Das Polymer wurde abgefüllt und auf Raumtemperatur abgekühlt.

Die Polymere **P2** bis **P5** und die Polymere **P7** bis **P12** wurden mit den in Tabelle 1 angegebenen Komponenten in analoger Weise wie das Polymer **P6** hergestellt, wobei für Polymer **P2** ein Polyetherpolyol statt eines Polyesterpolyols eingesetzt wurde, für das Polymer **P3** nur die erste Stufe durchgeführt wurde (keine Umsetzung mit Epoxidharz, daher ist das Polymer **P3** kein Polymer gemäss Anspruch 1), für die Polymere **P7** bis **P12** kein Katalysator (DBTL) in der ersten Stufe eingesetzt wurde und für das Polymer **P11** auch kein COOH-term. Polymer eingesetzt wurde. Für das Polymer **P2** wurde das Cardiolite NC700 als Blockierungsmittel in der ersten Stufe eingesetzt.

**Tabelle 1. Herstellung Präpolymere**

| | | **P1** | **P2** | **P3** | **P4** | **P5** | **P6** | **P7** | **P8** | **P9** | **P10** | **P11** | **P12** |
|---|---|---|---|---|---|---|---|---|---|---|---|---|---|
| **Polyol** | | | | | | | | | | | | | |
| | PTHF 650 | | 1,65 | | | | | | | | | | |
| | Dynacoll 7330 | 100 | | 78,05 | 13,49 | 10,87 | 12,01 | | | | | | |
| | Dynacoll 7331 | | | | | | | | 13,38 | | | | |
| | Dynacoll 7490 | | | | | | | | | 17 | 13,31 | | |
| | Dynacoll 7340 | | | | | | | 17,06 | | | | | |
| | EP431.01 | | | | | | | | | | | 17,97 | |
| | EP431.02 | | | | | | | | | | | | 12,15 |
| **Polyisocyanat** | | | | | | | | | | | | | |
| | IPDI | | | 10,71 | 1,85 | 1,49 | 1,65 | 2,26 | 1,69 | 2,19 | 1,71 | 2,29 | 1,45 |
| **COOH-term. Polymer** | | | | | | | | | | | | | |
| | Hypro X13 | | 33,1 | | 11,76 | 9,52 | 10,52 | 22,21 | 17,38 _ | 22,21 - | 17,38 | | 7,69 |
| **Epoxidharz** | | | | | | | | | | | | | |
| | GT 7071 | | 34,77 | | 58,78 | 76,16 | 31,56 | 27,76 | 57,95 | 27,76 | 57,94 | 76,90 | 76,89 |
| | DEN 431 | | | | | | | 27,76 | 7,24 | 27,76 | 7,24 | | |
| | DEN 438 | | | | | | 31,56 | | | | | | |
| | BFDGE | | 17,38 | | | | | | | | | | |
| | BADGE | | | | 11,76 | | | | | | | | |
| **Katalysator** | | | | | | | | | | | | | |
| | Sufe 2: PPh3 | | 0,04 | | 0,06 | 0,05 | 0,05 | 0,07 | 0,06 | 0,06 | 0,06 | 0,03 | 0,03 |
| | Sufe 1: DBTL | | 0,02 | 0,03 | 0,01 | 0,004 | 0,005 | | | | | | |
| **Phenol** | | | | | | | | | | | | | |
| | Cardolite NC700 | | 13,04 | | | | 10,52 | | | | | | |
| | Bisphenol-A | | | 11,21 | 2,29 | 1,91 | 2,12 | 2,88 | 2,3 | 3,02 | 2,36 | 2,81 | 1,79 |
| **Summe** | | 100,00 | 100,00 | 100,00 | 100,00 | 100,00 | 100,00 | 100,00 | 100,00 | 100,00 | 100,00 | 100,00 | 100,00 |
| **End-EEW [mol/kg]** | | | | | 1,76 | 1,36 | 1,72 | 1,80 | 1,27 | 1,82 | 1,28 | 1,34 | 1,34 |

### Herstellung der Vormischungen VM1 bis VM12

Jeweils 19,00 Gew.-Teile der Polymere **P1** bis **P12** wurden mit 80,00 Gew.-Teilen Epoxid-Festharz GT 7004 und 1,00 Gew.-Teil Silan (Silquest^{®}A187) gemischt, um die Vormischungen **VM1** bis **VM12** zu erhalten.

### Herstellung der Zusammensetzungen Z1 bis Z10 und Ref1 bis Ref2

Die in Tabelle 2 aufgeführten Substanzen wurden zu den Vormischungen **VM1** bis **VM12** in den angegebenen Gewichtsanteilen zugegeben und in einem OMC-Extruder gemischt, um die erfindungsgemäßen Epoxidharzzusammensetzungen **Z1** bis **Z10** und die Referenzbeispiele **Ref1** und **Ref2** herzustellen. Alle Komponenten wurden in den Extruder abgewogen, gut homogenisiert (alle Rohstoffe sind Feststoffe) und anschließend gemischt.

**Tabelle 2. Herstellung Epoxidharzzusammensetzung und Ergebnisse**

| | **Ref. 1** | **Ref. 2** | **Z1** | **Z2** | **Z3** | **Z4** | **Z5** | **Z6** | **Z7** | **Z8** | **Z9** | **Z10** |
|---|---|---|---|---|---|---|---|---|---|---|---|---|
| Vormischung **VM1** | 67,37 | | | | | | | | | | | |
| Vormischung **VM2** | | 73,03 | | | | | | | | | | |
| Vormischung **VM3** | | | 67,37 | | | | | | | | | |
| Vormischung **VM4** | | | | 67,18 | | | | | | | | |
| Vormischung **VM5** | | | | | 67,14 | | | | | | | |
| Vormischung **VM6** | | | | | | 67,19 | | | | | | |
| Vormischung **VM7** | | | | | | | 67,16 | | | | | |
| Vormischung **VM8** | | | | | | | | 67,22 | | | | |
| Vormischung **VM9** | | | | | | | | | 67,15 | | | |
| Vormischung **VM10** | | | | | | | | | | 67,22 | | |
| Vormischung **VM11** | | | | | | | | | | | 65,91 | |
| Vormischung **VM12** | | | | | | | | | | | | 65,91 |
| Dicy | 1,03 | 1,49 | 1,03 | 1,31 | 1,37 | 1,30 | 1,34 | 1,25 | 1,35 | 1,25 | 1,24 | 1,24 |
| Faser | 12,80 | 13,87 | 12,80 | 12,77 | 12,76 | 12,77 | 12,76 | 12,77 | 12,76 | 12,77 | 12,53 | 12,53 |
| Luvopor | 0,34 | 0,37 | 0,34 | 0,34 | 0,34 | 0,34 | 0,34 | 0,34 | 0,34 | 0,34 | 0,33 | 0,33 |
| SiO2 | 2,69 | 5,11 | 2,69 | 2,69 | 2,69 | 2,69 | 2,69 | 2,69 | 2,69 | 2,69 | 2,64 | 2,64 |
| CaCO3 | 3,37 | 3,65 | 3,37 | 3,36 | 3,36 | 3,36 | 3,36 | 3,36 | 3,36 | 3,36 | 3,30 | 3,30 |
| Talk | 2,02 | 2,19 | 2,02 | 2,02 | 2,01 | 2,02 | 2,01 | 2,02 | 2,01 | 2,02 | 1,98 | 1,98 |
| GHK | 10,11 | | 10,11 | 10,08 | 10,07 | 10,08 | 10,07 | 10,08 | 10,07 | 10,08 | 9,89 | 9,89 |
| Expancel | | | | | | | | | | | 1,65 | 1,65 |
| Kat1 | 0,27 | 0,29 | 0,27 | 0,27 | 0,27 | 0,27 | 0,27 | 0,27 | 0,27 | 0,27 | 0,53 | 0,53 |
| **Summe** | *100,00* | *100,00* | *100,00* | *100,00* | *100,00* | *100,00* | *100,00* | *100,00* | *100,00* | *100,00* | *100,00* | *100,00* |

| **Ergebnisse** | | | | | | | | | | | | |
|---|---|---|---|---|---|---|---|---|---|---|---|---|
| ZSF H0 [MPa] | 7,44 | 3,88 | 5,77 | 7,87 | 5,92 | 5,69 | 7,66 | 7,32 | 7,97 | 7,28 | 7,67 | 7,06 |
| ZSF H7 [MPa] | 3,55 | 3,12 | 5,17 | 6,69 | 5,36 | 5,21 | 6,43 | 6,86 | 7,00 | 5,93 | 6,58 | 5,98 |
| Abfall ZSF [%] | -52 | -20 | -10 | -15 | -9 | -8 | -16 | -6 | -12 | -19 | -14 | -15 |
| d vor Härtung [mm] | 1,89 | 1,86 | 2,09 | 1,98 | 2,23 | 2,33 | 2,13 | 2,4 | 2,28 | 2,57 | 1,92 | 2,23 |
| d nach Härtung [mm] | 3,18 | 3,15 | 4,24 | 3,58 | 3,95 | 4,73 | 4,08 | 4,22 | 4,01 | 4,58 | 4,04 | 5,19 |
| vertikale Expansion [%] | 68 | 69 | 103 | 81 | 77 | 103 | 92 | 76 | 76 | 78 | 110 | 133 |

### Prüfmethoden

### Abfall Zugscherfestigkeit

Die Zugscherfestigkeit (ZSF) wurde in Anlehnung an ISO 4587/DIN EN 1465 auf einer Zugmaschine Zwick/Roell Z005 bestimmt, wobei jeweils zwei gleiche Substrate miteinander verklebt wurden (Klebefläche: 25x20 mm; Schichtdicke: 2 mm; Messgeschwindigkeit: 10 mm/min; Substrate: feuerverzinkter Stahl G1010 (HLE, HE450M), 100x25x1,8mm; Aushärtung: 30 Min. bei 180°C; Messtemperatur: 23°C.

Die erste Messung der Zugscherfestigkeit (ZSF H0) wurde nach der Aushärtung nach 30 Minuten 180°C der Zusammensetzung durchgeführt. Eine zweite Messung (ZSF H7) wurde nach der Lagerung des Prüfkörpers während 7 Tagen bei 70 °C und 100% relativer Luftfeuchtigkeit (Cataplasma-Lagerung) durchgeführt. Die Änderung der Zugscherfestigkeit nach Cataplasma-Lagerung (ZSF H7) in Bezug zur Zugscherfestigkeit nach der Aushärtung (ZSF H0) ist in % angegeben (Abfall ZSF). Die Ergebnisse sind in Tabelle 2 gezeigt.

### Vertikale Expansion

Die Epoxidharzzusammensetzung wurde auf ein Substrat appliziert und die Schichtdicke wurde bestimmt (d vor Härtung). Anschließend wurde die Beschichtung gehärtet und expandiert. Die Aushärtung erfolgte 30 min bei 180 °C. Die Schichtdicke nach der Härtung wurde bestimmt (d nach Härtung). Die Dickenmessung vor und nach der Expansion bzw. Härtung erfolgte mit einem Messschieber. Die vertikale Expansion wurde als prozentuale Zunahme der Dicke der applizierten Epoxidharzzusammensetzung nach der Härtung verglichen mit der Dicke der applizierten Zusammensetzung vor der Härtung bestimmt. Die Ergebnisse sind in Tabelle 2 gezeigt.

### Resultate

Alle erfindungsgemäßen Formulierungen zeigen bei gleichzeitig höherer Expansion höhere mechanische Werte. Der Abfall der Zugscherfestigkeit ist bei den erfindungsgemäßen Beispielen deutlich geringer und die vertikale Expansion höher. Der geringere Haftungsabfall ist auf eine geringere Unterwanderungskorrosion zurückzuführen.

### Bezugszeichenliste

- 1: schäumbare Zusammensetzung
- 2: geschäumte Zusammensetzung
- 3: Trägermaterial
- 4: strukturelles Bauteil

## Patentansprüche

1. Polymer, welches ein Reaktionsprodukt von einem blockierte Isocyanatgruppen aufweisenden Polyurethan-Polymer mit mindestens einem Epoxidharz ist,
wobei das blockierte Isocyanatgruppen aufweisende Polyurethan-Polymer ein Additionsprodukt aus mindestens einem Polyisocyanat und mindestens einem Polyesterpolyol ist, wobei die Isocyanatgruppen des Additionsprodukts durch Umsetzung mit mindestens einer aromatischen Verbindung, die eine oder zwei phenolische OH-Gruppen aufweist, blockiert sind, und
wobei das Polyesterpolyol aus mindestens einem C₃-C₁₂-Diol und mindestens einer aliphatischen oder aromatischen C₃-C₁₅-Dicarbonsäure oder deren Methylester gebildet ist.

2. Polymer nach Anspruch 1, wobei das C₃-C₁₂-Diol ein aliphatisches C₃-C₁₂-Diol ist.

3. Polymer nach einem der Ansprüche 1 oder 2, wobei das Polyesterpolyol ein mittleres Molekulargewicht im Bereich von 1000 bis 10000 g/mol aufweist.

4. Polymer nach einem der Ansprüche 1 bis 3, wobei die aromatische Verbindung, die eine oder zwei phenolische OH-Gruppen aufweist,ein Diphenol, insbesondere Bisphenol A oder Bisphenol F, ein alkylsubstituiertes Phenol, ein alkenylsubstituiertes Phenol oder ein alkoxysubstituiertes Phenol ist.

5. Polymer nach einem der Ansprüche 1 bis 4, wobei das Epoxidharz ein Epoxid-Festharz, ein Epoxid-Flüssigharz oder ein Novolak-Epoxidharz oder eine Mischung dieser Epoxidharze ist, wobei das Epoxidharz vorzugsweise ein Bisphenol A-Epoxid-Festharz, ein Bisphenol F-Epoxid-Festharz oder eine Mischung davon ist.

6. Polymer nach einem der Ansprüche 1 bis 5, wobei das Reaktionsprodukt von mindestens einem Epoxidharz mit mindestens einem blockierte Isocyanatgruppen aufweisenden Polyurethan-Polymer zumindest teilweise zusätzlich mit einem Carboxylgruppen aufweisenden Polymer, bevorzugt einem mit Carboxylgruppen terminierten Butadien/Acrylnitril-Copolymer, modifiziert ist.

7. Polymer nach einem der Ansprüche 1 bis 6, wobei die aromatische Verbindung, die eine oder zwei phenolische OH-Gruppen aufweist, ausgewählt ist aus Phenol, Kresol, p-tert.-Butylphenol, 3-Pentadecenylphenol, Nonylphenol, Hydrochinon-monomethylether, p-Hydroxybenzoesäure, Hydroxybenzylalkohol, und Bisphenole oder Diphenole, wie z.B. mit Styrol oder Dicyclopentadien umgesetzte Phenole, Bisphenol A, Bisphenol F, Phenolphthalein, 4-Bis(4-hydroxyphenyl)valeriansäure, Allylphenol, Hydrochinonmonomethylether, Cardolite NC700 oder 4-Cumylphenol.

8. Polymer nach einem der Ansprüche 1 bis 7, erhältlich durch ein Verfahren umfassend die Schritte
a) Umsetzen von mindestens einem Polyisocyanat mit mindestens einem Polyesterpolyol, gegebenenfalls in Anwesenheit eines Katalysators, um ein Isocyanatgruppen aufweisendes Polyurethan-Polymer als Additionsprodukt zu erhalten, wobei das Polyesterpolyol aus mindestens einem C₃-C₁₂-Diol und mindestens einer aliphatischen oder aromatischen C₃-C₁₅-Dicarbonsäure oder deren Methylester gebildet ist,
b) Umsetzen des Isocyanatgruppen aufweisenden Polyurethan-Polymers mit mindestens einer aromatischen Verbindung, die eine oder zwei phenolische OH-Gruppen aufweist, um die Isocyanatgruppen zu blockieren, und
c) Umsetzen des blockierte Isocyanatgruppen aufweisenden Polyurethan-Polymers mit mindestens einem Epoxidharz, gegebenenfalls in Anwesenheit eines Katalysators,
wobei gegebenenfalls die Umsetzung in Schritt c) in Anwesenheit eines Carboxylgruppen aufweisenden Polymers, bevorzugt eines mit Carboxylgruppen terminierten Butadien/Acrylnitril-Copolymers, erfolgt oder das in Schritt c) erhaltene Reaktionsprodukt mit einem Carboxylgruppen aufweisenden Polymer, bevorzugt einem mit Carboxylgruppen terminierten Butadien/Acrylnitril-Copolymer, umgesetzt wird.

9. Ein- oder zweikomponentige Epoxidharzzusammensetzung, enthaltend mindestens ein Epoxidharz, mindestens einen Härter für das Epoxidharz und mindestens ein Polymer nach einem der Ansprüche 1 bis 8 oder mindestens ein Polymer, welches ein blockierte Isocyanatgruppen aufweisendes Polyurethan-Polymer ist, wobei das blockierte Isocyanatgruppen aufweisende Polyurethan-Polymer ein Additionsprodukt aus mindestens einem Polyisocyanat und mindestens einem Polyesterpolyol ist, wobei die Isocyanatgruppen des Additionsprodukts durch Umsetzung mit mindestens einer aromatischen Verbindung, die eine oder zwei phenolische OH-Gruppen aufweist, blockiert sind, und
wobei das Polyesterpolyol aus mindestens einem C₃-C₁₂-Diol und mindestens einer aliphatischen oder aromatischen C₃-C₁₅-Dicarbonsäure oder deren Methylester gebildet ist, als Schlagzähigkeitsmodifikator.

10. Ein- oder zweikomponentige Epoxidharzzusammensetzung nach Anspruch 9, welche ein Treibmittel umfasst.

11. Ein- oder zweikomponentige Epoxidharzzusammensetzung nach Anspruch 9 oder Anspruch 10, wobei die Epoxidharzzusammensetzung ein Klebstoff, ein Strukturklebstoff oder eine schäumbare Epoxidharzzusammensetzung ist.

12. Verwendung eines Polymers nach einem der Ansprüche 1 bis 8 oder eines Polymers, welches ein blockierte Isocyanatgruppen aufweisendes Polyurethan-Polymer ist, wobei das blockierte Isocyanatgruppen aufweisende Polyurethan-Polymer ein Additionsprodukt aus mindestens einem Polyisocyanat und mindestens einem Polyesterpolyol ist, wobei die Isocyanatgruppen des Additionsprodukts durch Umsetzung mit mindestens einer aromatischen Verbindung, die eine oder zwei phenolische OH-Gruppen aufweist, blockiert sind, und
wobei das Polyesterpolyol aus mindestens einem C₃-C₁₂-Diol und mindestens einer aliphatischen oder aromatischen C₃-C₁₅-Dicarbonsäure oder deren Methylester gebildet ist, als Schlagzähigkeitsmodifikator in einer ein- oder zweikomponentigen Epoxidharzzusammensetzung, wobei die Epoxidharzzusammensetzung bevorzugt ein Klebstoff, ein Strukturklebstoff oder eine schäumbare Epoxidharzzusammensetzung ist.

13. Verwendung nach Anspruch 12 zur Verbesserung der Korrosionsbeständigkeit und/oder, sofern die Epoxidharzzusammensetzung eine schäumbare Epoxidharzzusammensetzung ist, zur Verbesserung der vertikalen Expansion der Epoxidharzzusammensetzung.

14. Verfahren zur Herstellung eines Polymers nach einem der Ansprüche 1 bis 8, umfassend
a) Umsetzen von mindestens einem Polyisocyanat mit mindestens einem Polyesterpolyol, gegebenenfalls in Anwesenheit eines Katalysators, um ein Isocyanatgruppen aufweisendes Polyurethan-Polymer als Additionsprodukt zu erhalten, wobei das Polyesterpolyol aus mindestens einem C₃-C₁₂-Diol und mindestens einer aliphatischen oder aromatischen C₃-C₁₅-Dicarbonsäure oder deren Methylester gebildet ist,
b) Umsetzen des Isocyanatgruppen aufweisenden Polyurethan-Polymers mit mindestens einer aromatischen Verbindung, die eine oder zwei phenolische OH-Gruppen aufweist, um die Isocyanatgruppen zu blockieren, und
c) Umsetzen des blockierte Isocyanatgruppen aufweisenden Polyurethan-Polymers mit mindestens einem Epoxidharz, gegebenenfalls in Anwesenheit eines Katalysators,
wobei gegebenenfalls die Umsetzung in Schritt c) in Anwesenheit eines Carboxylgruppen aufweisenden Polymers, bevorzugt eines mit Carboxylgruppen terminierten Butadien/Acrylnitril-Copolymers, erfolgt oder das in Schritt c) erhaltene Reaktionsprodukt mit einem Carboxylgruppen aufweisenden Polymer, bevorzugt einem mit Carboxylgruppen terminierten Butadien/Acrylnitril-Copolymer, umgesetzt wird.

## Claims

1. Polymer which is a reaction product of a polyurethane polymer containing blocked isocyanate groups with at least one epoxy resin,
wherein the polyurethane polymer containing blocked isocyanate groups is an adduct of at least one polyisocyanate and at least one polyester polyol, the isocyanate groups of the adduct being blocked by reaction with at least one aromatic compound which contains one or two phenolic OH groups, and
wherein the polyester polyol is formed from at least one C₃-C₁₂ diol and at least one aliphatic or aromatic C₃-C₁₅ dicarboxylic acid or methyl ester thereof.

2. Polymer according to Claim 1, wherein the C₃-C₁₂ diol is an aliphatic C₃-C₁₂ diol.

3. Polymer according to either of Claims 1 and 2, wherein the polyester polyol has an average molecular weight in the range from 1000 to 10 000 g/mol.

4. Polymer according to any of Claims 1 to 3, where the aromatic compound which contains one or two phenolic OH groups is a diphenol, more particularly bisphenol A or bisphenol F, an alkyl-substituted phenol, an alkenyl-substituted phenol or an alkoxy-substituted phenol.

5. Polymer according to any of Claims 1 to 4, wherein the epoxy resin is a solid epoxy resin, a liquid epoxy resin or a novolac epoxy resin or a mixture of these epoxy resins, the epoxy resin preferably being a solid bisphenol A epoxy resin, a solid bisphenol F epoxy resin or a mixture thereof.

6. Polymer according to any of Claims 1 to 5, wherein the reaction product of at least one epoxy resin with at least one polyurethane polymer containing blocked isocyanate groups is additionally modified at least partially with a polymer containing carboxyl groups, preferably with a butadiene/acrylonitrile copolymer terminated with carboxyl groups.

7. Polymer according to any of Claims 1 to 6, wherein the aromatic compound which contains one or two phenolic OH groups is selected from phenol, cresol, p-tertbutylphenol, 3-pentadecenylphenol, nonylphenol, hydroquinone monomethyl ether, p-hydroxybenzoic acid, hydroxybenzyl alcohol, and bisphenols or diphenols, such as phenols reacted with styrene or with dicyclopentadiene, for example, bisphenol A, bisphenol F, phenolphthalein, 4-bis(4-hydroxyphenyl)valeric acid, allylphenol, hydroquinone monomethyl ether, Cardolite NC700 or 4-cumylphenol.

8. Polymer according to any of Claims 1 to 7, obtainable by a process comprising the steps of
a) reacting at least one polyisocyanate with at least one polyester polyol, optionally in the presence of a catalyst, to give an adduct in the form of a polyurethane polymer containing isocyanate groups, the polyester polyol being formed from at least one C₃-C₁₂ diol and at least one aliphatic or aromatic C₃-C₁₅ dicarboxylic acid or methyl ester thereof,
b) reacting the polyurethane polymer containing isocyanate groups with at least one aromatic compound which contains one or two phenolic OH groups, to block the isocyanate groups, and
c) reacting the polyurethane polymer containing blocked isocyanate groups with at least one epoxy resin, optionally in the presence of a catalyst,
wherein optionally the reaction in step c) takes place in the presence of a polymer containing carboxyl groups, preferably of a butadiene/acrylonitrile copolymer terminated with carboxyl groups, or the reaction product obtained in step c) is reacted with a polymer containing carboxyl groups, preferably with a butadiene/acrylonitrile copolymer terminated with carboxyl groups.

9. One- or two-component epoxy resin composition comprising at least one epoxy resin, at least one hardener for the epoxy resin, and at least one polymer according to any of Claims 1 to 8 or at least one polymer which is a polyurethane polymer containing blocked isocyanate groups, the polyurethane polymer containing blocked isocyanate groups being an adduct of at least one polyisocyanate and at least one polyester polyol, the isocyanate groups of the adduct being blocked by reaction with at least one aromatic compound which contains one or two phenolic OH groups, and
wherein the polyester polyol is formed from at least one C₃-C₁₂ diol and at least one aliphatic or aromatic C₃-C₁₅ dicarboxylic acid or methyl ester thereof, as impact modifier.

10. One- or two-component epoxy resin composition according to Claim 9, which comprises a blowing agent.

11. One- or two-component epoxy resin composition according to Claim 9 or Claim 10, wherein the epoxy resin composition is an adhesive, a structural adhesive or a foamable epoxy resin composition.

12. Use of a polymer according to any of Claims 1 to 8 or of a polymer which is a polyurethane polymer containing blocked isocyanate groups, the polyurethane polymer containing blocked isocyanate groups being an adduct of at least one polyisocyanate and at least one polyester polyol, the isocyanate groups of the adduct being blocked by reaction with at least one aromatic compound which contains one or two phenolic OH groups, and
wherein the polyester polyol is formed from at least one C₃-C₁₂ diol and at least one aliphatic or aromatic C₃-C₁₅ dicarboxylic acid or methyl ester thereof, as impact modifier in a one- or two-component epoxy resin composition, the epoxy resin composition being preferably an adhesive, a structural adhesive or a foamable epoxy resin composition.

13. Use according to Claim 12 for improving the corrosion resistance and/or, if the epoxy resin composition is a foamable epoxy resin composition, for improving the vertical expansion of the epoxy resin composition.

14. Process for preparing a polymer according to any of Claims 1 to 8, comprising
a) reacting at least one polyisocyanate with at least one polyester polyol, optionally in the presence of a catalyst, to give an adduct in the form of a polyurethane polymer containing isocyanate groups, the polyester polyol being formed from at least one C₃-C₁₂ diol and at least one aliphatic or aromatic C₃-C₁₅ dicarboxylic acid or methyl ester thereof,
b) reacting the polyurethane polymer containing isocyanate groups with at least one aromatic compound which contains one or two phenolic OH groups, to block the isocyanate groups, and
c) reacting the polyurethane polymer containing blocked isocyanate groups with at least one epoxy resin, optionally in the presence of a catalyst,
wherein optionally the reaction in step c) takes place in the presence of a polymer containing carboxyl groups, preferably of a butadiene/acrylonitrile copolymer terminated with carboxyl groups, or the reaction product obtained in step c) is reacted with a polymer containing carboxyl groups, preferably with a butadiene/acrylonitrile copolymer terminated with carboxyl groups.

## Revendications

1. Polymère, qui est un produit de réaction d'un polymère de type polyuréthane présentant des groupes isocyanate bloqués avec au moins une résine époxy,
le polymère de type polyuréthane présentant des groupes isocyanate bloqués étant un produit d'addition d'au moins un polyisocyanate et d'au moins un polyesterpolyol, les groupes isocyanate du produit d'addition étant bloqués par transformation d'au moins un composé aromatique qui présente un ou deux groupes OH phénoliques, et
le polyesterpolyol étant formé à partir d'au moins un diol en C₃₋₁₂ et d'au moins un acide dicarboxylique aliphatique ou aromatique en C₃₋₁₅ ou de son ester méthylique.

2. Polymère selon la revendication 1, le diol en C₃₋₁₂ étant un diol en C₃₋₁₂ aliphatique.

3. Polymère selon l'une quelconque des revendications 1 et 2, le polyesterpolyol présentant un poids moléculaire moyen dans la plage de 1 000 à 10 000 g/mole.

4. Polymère selon l'une quelconque des revendications 1 à 3, le composé aromatique qui présente un ou deux groupes OH phénoliques étant un diphénol, en particulier le bisphénol A ou le bisphénol F, un phénol substitué par alkyle, un phénol substitué par alcényle ou un phénol substitué par alcoxy.

5. Polymère selon l'une quelconque des revendications 1 à 4, la résine époxy étant une résine solide époxy, une résine liquide époxy ou une résine époxy novolak ou un mélange de ces résines époxy, la résine époxy étant de préférence une résine solide époxy-bisphénol A, une résine solide époxy-bisphénol F ou un mélange correspondant.

6. Polymère selon l'une quelconque des revendications 1 à 5, le produit de réaction d'au moins une résine époxy avec au moins un polymère de type polyuréthane présentant des groupes isocyanate bloqués étant modifié au moins partiellement de plus par un polymère présentant des groupes carboxyle, préférablement par un copolymère butadiène/acrylonitrile terminé par des groupes carboxyle.

7. Polymère selon l'une quelconque des revendications 1 à 6, le composé aromatique qui présente un ou deux groupes OH phénoliques étant choisi parmi le phénol, le crésol, le p-tert. butylphénol, le 3-pentadécénylphénol, le nonylphénol, l'éther monométhylique de l'hydroquinone, l'acide p-hydroxybenzoïque, l'alcool hydroxybenzylique, et les bisphénols ou les diphénols comme par exemple les phénols ayant réagi avec le styrène ou le dicyclopentadiène, le bisphénol A, le bisphénol F, la phénolphtaléine, l'acide 4-bis(4-hydroxyphényl)valérique, l'allylphénol, l'éther monométhylique d'hydroquinone, le Cardolite NC700 ou le 4-cumylphénol.

8. Polymère selon l'une quelconque des revendications 1 à 7, obtenu par un procédé comprenant les étapes
a) transformation d'au moins un polyisocyanate avec au moins un polyesterpolyol, éventuellement en présence d'un catalyseur, afin d'obtenir un polymère de type polyuréthane présentant des groupes isocyanate en tant que produit d'addition, le polyesterpolyol étant formé à partir d'au moins un diol en C₃₋₁₂ et d'au moins un acide dicarboxylique aliphatique ou aromatique en C₃₋₁₅ ou de son ester méthylique,
b) transformation du polymère de type polyuréthane présentant des groupes isocyanate avec au moins un composé aromatique qui présente un ou deux groupes OH phénoliques, afin de bloquer les groupes isocyanate, et
c) transformation du polymère de type polyuréthane présentant des groupes isocyanate bloqués avec au moins une résine époxy, éventuellement en présence d'un catalyseur,
éventuellement, la transformation dans l'étape c) étant réalisée en présence d'un polymère présentant des groupes carboxyle, préférablement d'un copolymère de butadiène/acrylonitrile terminé par des groupes carboxyle ou le produit de réaction obtenu dans l'étape c) étant transformé avec un polymère présentant des groupes carboxyle, préférablement avec un copolymère de butadiène/acrylonitrile terminé par des groupes carboxyle.

9. Composition de résine époxy à un composant ou à deux composants, contenant au moins une résine époxy, au moins un agent de durcissement pour la résine époxy et au moins un polymère selon l'une quelconque des revendications 1 à 8 ou au moins un polymère qui est un polymère de type polyuréthane présentant des groupes isocyanate bloqués, le polymère de type polyuréthane présentant des groupes isocyanate bloqués étant un produit d'addition d'au moins un polyisocyanate et d'au moins un polyesterpolyol, les groupes isocyanate du produit l'addition étant bloqués par transformation avec au moins un composé aromatique qui présente un ou deux groupes OH phénoliques, et
le polyesterpolyol étant formé à partir d'au moins un diol en C₃₋₁₂ et d'au moins un acide dicarboxylique aliphatique ou aromatique en C₃₋₁₅ ou de son ester méthylique, en tant que modificateur de résistance aux chocs.

10. Composition de résine époxy à un composant ou à deux composants selon la revendication 9, qui comprend un agent d'expansion.

11. Composition de résine époxy à un composant ou à deux composants selon la revendication 9 ou la revendication 10, la composition de résine époxy étant un adhésif, un adhésif structural ou une composition de résine époxy moussable.

12. Utilisation d'un polymère selon l'une quelconque des revendications 1 à 8 ou d'un polymère qui est un polymère de type polyuréthane présentant des groupes isocyanate bloqués, le polymère de type polyuréthane présentant des groupes isocyanate bloqués étant un produit d'addition d'au moins un polyisocyanate et d'au moins un polyesterpolyol, les groupes isocyanate du produit l'addition étant bloqués par transformation avec au moins un composé aromatique qui présente un ou deux groupes OH phénoliques, et le polyesterpolyol étant formé à partir d'au moins un diol en C₃₋₁₂ et d'au moins un acide dicarboxylique aliphatique ou aromatique en C₃₋₁₅ ou de son ester méthylique, en tant que modificateur de résistance aux chocs dans une composition de résine époxy à un composant ou à deux composants, la composition de résine époxy étant préférablement un adhésif, un adhésif structural ou une composition de résine époxy moussable.

13. Utilisation selon la revendication 12 pour l'amélioration de la résistance à la corrosion et/ou, à condition que la composition de résine époxy est une composition de résine époxy moussable, pour l'amélioration de l'expansion verticale de la composition de résine époxy.

14. Procédé de préparation d'un polymère selon l'une quelconque des revendications 1 à 8, comprenant
a) transformation d'au moins un polyisocyanate avec au moins un polyesterpolyol, éventuellement en présence d'un catalyseur, afin d'obtenir un polymère de type polyuréthane présentant des groupes isocyanate en tant que produit d'addition, le polyesterpolyol étant formé à partir d'au moins un diol en C₃₋₁₂ et d'au moins un acide dicarboxylique aliphatique ou aromatique en C₃₋₁₅ ou de son ester méthylique,
b) transformation du polymère de type polyuréthane présentant des groupes isocyanate avec au moins un composé aromatique qui présente un ou deux groupes OH phénoliques, afin de bloquer les groupes isocyanate, et
c) transformation du polymère de type polyuréthane présentant des groupes isocyanate bloqués avec au moins une résine époxy, éventuellement en présence d'un catalyseur,
éventuellement, la transformation dans l'étape c) étant réalisée en présence d'un polymère présentant des groupes carboxyle, préférablement d'un copolymère de butadiène/acrylonitrile terminé par des groupes carboxyle ou le produit de réaction obtenu dans l'étape c) étant transformé avec un polymère présentant des groupes carboxyle, préférablement avec un copolymère de butadiène/acrylonitrile terminé par des groupes carboxyle.
